# EUROPÄISCHE PATENTSCHRIFT

(11) **EP 2 883 459 B1**
(45) Veröffentlichungstag und Bekanntmachung des Hinweises auf die Patenterteilung: **04.04.2018**
(21) Anmeldenummer: 13197385.1
(22) Anmeldetag: 16.12.2013
(51) Int. Cl.: A23L 27/30, A23L 27/00, A23L 2/60

(54) **Zubereitungen zur oralen Aufnahme**
Compositions for oral consumption
Compositions pour consommation orale

(43) Veröffentlichungstag der Anmeldung: 17.06.2015
(73) Patentinhaber: Symrise AG, 37603 Holzminden (DE)
(72) Erfinder: Reichelt, Katharina, 37603 Holzminden (DE); Ley, Jakob, 37603 Holzminden (DE); Paetz, Susanne, 37671 Höxter (DE); Hoffmann-Lücke, Petra, 31073 Delligsen (DE); Blings, Maria, 37603 Holzminden (DE)
(74) Vertreter: Eisenführ Speiser

(56) Entgegenhaltungen:
- WO-A2-2012/044785
- US-A- 5 198 427
- US-A1- 2010 227 034
- US-A1- 2011 244 094
- DATABASE WPI Week 200567 Thomson Scientific, London, GB; AN 2005-651742 XP2428677, & JP 2005 237303 A (SARAYA KK) 8. September 2005 (2005-09-08)
- CHOI Y-H ET AL: "ABRUSOSIDES A-D FOUR NOVEL SWEET-TASTING TRITERPENE GLYCOSIDES FROM THE LEAVES OF ABRUS-PRECATORIUS", JOURNAL OF NATURAL PRODUCTS, AMERICAN CHEMICAL SOCIETY, US, vol. 52, no. 5, 1 September 1989 (1989-09-01), pages 1118-1127, XP002670036, ISSN: 0163-3864

## Beschreibung

### GEBIET DER ERFINDUNG

Die Erfindung befindet sich auf dem Gebiet Nahrungsmittel und anderer oral zu konsumierenden Zubereitungen und betrifft den Einsatz von Mischungen aus Abrusosiden und weiteren natürlichen Süßstoffen zur Herstellung dieser Zubereitungen.

### STAND DER TECHNIK

Nahrungs- oder Genussmittel sowie Getränke und andere oral konsumierbare Produkte, die einen hohen Zuckergehalt (vor allem Sucrose (= Saccharose), Lactose, Glucose oder Fructose oder deren Mischungen) aufweisen, werden in der Regel von Verbrauchern auf Grund der Süße stark präferiert. Auf der anderen Seite ist allgemein bekannt, dass ein hoher Gehalt an leicht verstoffwechselbaren Kohlenhydraten den Blutzuckerspiegel stark ansteigen lässt, zur Bildung von Fettdepots führt und letztendlich zu gesundheitlichen Problemen wie Übergewicht, Fettleibigkeit, Insulinresistenz, Altersdiabetes und deren Folgeerkrankungen führen kann. Insbesondere kommt erschwerend hinzu, dass viele der oben genannten Kohlenhydrate zusätzlich die Zahngesundheit beeinträchtigen können, da sie von bestimmten Bakteriensorten in der Mundhöhle zu beispielsweise Milchsäure abgebaut werden und den Zahnschmelz der juvenilen oder adulten Zähne angreifen können (Karies).

Daher ist es schon lange ein Ziel, den Zuckergehalt von Nahrungs- und/oder Genussmitteln und Getränken soweit wie möglich zu reduzieren, wobei bevorzugtes Ziel ist, diese Reduktion mit möglichst geringer Verringerung des Süßeindruckes zu erreichen. Eine entsprechende Maßnahme besteht im Einsatz von Süßstoffen: das sind chemisch einheitliche Substanzen, die selbst keinen oder nur einen sehr geringen kalorischen Brennwert haben und gleichzeitig einen starken süßen Geschmackseindruck verursachen; die Stoffe sind in der Regel nicht-kariogen; eine Übersicht hierzu ist beispielsweise zu finden in Journal of the American Dietetic Association 104 (2), S.255-275 (2004**).**

Die nicht-nutritiven, hochintensiven Süßstoffe sind zwar durch ihre geringe Einsatzkonzentration gut geeignet, Süße in Nahrungsmittel zu bringen, zeigen jedoch oft geschmackliche Probleme durch im Vergleich zu Zucker unähnliche Zeit-Intensitätsprofile (beispielsweise Sucralose, Stevia-Produkte, Rebaudioside, Stevioside, Cyclamat), einen bitteren und/oder adstringierenden Nachgeschmack (beispielsweise Acesulfam K, Saccharin, Stevia-Produkte, Rebaudioside, Stevioside), ausgeprägte zusätzliche Aromaeindrücke (beispielsweise Glycerrhyzinsäureammoniumsalz). Einige der Süßstoffe sind gegenüber Hitze nicht besonders stabil (beispielsweise Thaumatin, Brazzein, Monellin), sind nicht in allen Anwendungen stabil (beispielsweise Aspartam) und sind teilweise sehr langanhaltend in ihrer süßen Wirkung (starker süßer Nachgeschmack, beispielsweise Saccharin, Stevia-Produkte, Rebaudioside, Stevioside).

Eine andere Möglichkeit - ohne den Einsatz von nicht-nutritiven Süßstoffen - besteht darin, den Zuckergehalt von Nahrungs- und/oder Genussmitteln zu senken und sensorisch schwach oder nicht wahrnehmbare Stoffe zuzusetzen, die die Süße mittelbar oder unmittelbar verstärken, wie z.B. in der internationalen Patentanmeldung WO 2005 041684A1beschrieben. Die in dieser Druckschrift beschriebenen Stoffe sind aber ausdrücklich nichtnatürlichen Ursprungs und somit aus toxikologischer Sicht schwieriger zu bewerten als Stoffe natürlicher Herkunft, insbesondere wenn letztere in Nahrungs- oder Genussmitteln vorkommen oder aus Rohstoffen zur Nahrungs- oder Genussmittelgewinnung stammen.

In der Druckschrift EP1291342A1 werden Pyridinium-Betaine als Süßstoffe natürlicher Herkunft beschrieben; allerdings wird durch sie nicht selektiv der süße Geschmack, sondern auch andere Geschmacksrichtungen wie Umami oder Salzigkeit beeinflusst. Zudem sind die offenbarten Stoffe nur mit hohem Aufwand zu reinigen.

In der internationalen Patentanmeldung WO 2007/014879 A1 wird der Einsatz von Hesperetin als Verstärker des süßen Geschmacks von Zucker-reduzierten, der Ernährung oder dem Genuss dienenden Zubereitungen empfohlen. Bisweilen nachteilig ist allerdings bei Einsatz von Hesperetin dessen geringe Löslichkeit insbesondere in klaren, wässrigen Anwendungen (wie z.B. klaren Cola- oder Zitronenlimonaden) sowie die vergleichsweise schwach ausgeprägte Süßverstärkung in sauren Nahrungs- und Genussmitteln. In dieser Druckschrift wird auch die Verwendung von Hesperetin in Kombination mit 4-Hydroxydihydrochalkonen beschrieben. Dabei können schon erhebliche Reduzierungen der Zucker- oder Süßstoffmengen bei gleicher Süße und weitgehend ausreichender Löslichkeit erreicht werden, allerdings in vielen Fällen keine Wiederherstellung der Süße bei mehr als 25 % Reduktion der Zucker- oder Süßstoffmengen vor allem in stärker sauren (pH < 5) Applikationen.

Gegenstand der Druckschrift WO 2012 044785 A2 (P&G) sind Süßungsmittel mit hoher Sucroseäquivalenz, welche eine Mischung zwei synthetischen und einem natürlichen Süßstoffen enthalten, wobei letzterer von Zucker verschieden ist.

In der Patentanmeldung US2011 076239A1 wird der Einsatz von Phyllodulcin *aus Hydrangea macrophylla* var. *thunbergii* Makino, bzw. Extrakten aus derselben Pflanze, enthaltend Phyllodulcin als Verstärker des süßen Geschmacks von Zucker-reduzierten, der Ernährung oder dem Genuss dienenden Zubereitungen empfohlen. Allerdings ist Phyllodulcin als phenolisches Lacton weder in basischen noch stärker sauren Anwendungen ausreichend stabil.

Gegenstand der Patentschrift US 5,198427 sind die in *Abrus precatorius* und *Abrus fruticulosus* vorkommenden Cycloartaneglycoside Abrusoside A, B, C, D und E und deren Verwendung als Süßstoffe.

Andere Veröffentlichungen, die in die gleiche Richtung gehen, finden sich beispielsweise von Choi et al., in Journal of Natural Products, 52 (5), S. 1118-1127 (1989**).** Methylester der Abrusoside weisen ebenfalls süßende Eigenschaften auf (Kenelly et al., Phytochemistry, 41, S. 1381-1883 (1996**).**

Vor diesem Stand der Technik als Hintergrund hat Aufgabe der Erfindung darin bestanden, oral konsumierbare, süß schmeckende Produkte zur Verfügung zu stellen, die gegenüber Produkten mit einem vergleichbaren Süßeindruck eine reduzierte Zucker- und/oder Süßstoffmenge aufweisen. Bestandteil dieser Aufgabe war es, entsprechende Vorprodukte oder Zwischenprodukte in Form von Aromamischungen anzugeben, die in den oral konsumierbaren süß schmeckenden Produkten in verdünnter Form eingesetzt werden können und den gewünschten Effekt gewährleisten, dabei aber in einer Vergleichsanwendung ohne Zusatz weiterer süßer Stoffe nicht wahrnehmbar süß schmecken. Bevorzugt sollten die Produkte bzw. Aromakompositionen hinsichtlich des von ihnen vermittelten Süßeindruckes stabil sein, der Süßeindruck auf natürlich vorkommenden Verbindungen basieren und/oder die Reduktion der Zucker- oder Süßstoffmenge bei gleichbleibendem Süßeindruck möglich sein, ohne dass das übliche Aromaprofil negativ beeinflusst wird. Außerdem war erwünscht, dass die Mittel, die eine Reduktion der Zucker- oder Süßstoffmenge ermöglichen, gut und klar in Wasser löslich sind.

### BESCHREIBUNG DER ERFINDUNG

Gegenstand der Erfindung sind Aromamischungen, enthaltend
(a) mindestens ein Abrusosid oder einen Abrusosidreichen Pflanzenextrakt und
(b) mindestens einen weiteren natürlichen Süßstoff, ausgewählt aus der Gruppe, die gebildet wird von Sucrose, Trehalose, Lactose, Maltose, Melizitose, Melibiose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd, Maltodextrin, Glycerin, Erythritol, Threitol, Arabitol, Ribitol, Xylitol, Sorbitol, Mannitol, Maltitol, Isomaltit, Dulcitol, Lactitol, Miraculin, Curculin, Monellin, Mabinlin, Thaumatin, Curculin, Brazzein, Pentadin, D-Phenylalanin, D-Tryptophan, Steviosid, Steviolbiosid, Rebaudiosid A, Rebaudiosid B, Rebaudiosid C, Rebaudiosid D, Rebaudiosid E, Rebaudiosid F, Rebaudiosid G, Rebaudiosid H, Dulcosid, Rubusosid, Oslandin, Polypodosid A, Strogin 1, Strogin 2, Strogin 4, Selligueanin A, Dihydroquercetin-3-acetat, Perillartin, Telosmosid A₁₅, Periandrin I-V, Phyllodulcin, Pterocaryosiden, Cyclocaryosiden, Mukuroziosiden, trans-Anethol, trans-Cinnamaldehyd, Bryosiden, Bryonosiden, Bryonodulcosiden, Carnosiflosiden, Scandenosiden, Gypenosiden, Trilobatin, Phloridzin, Dihydroflavanolen, Hematoxylin, Cyanin, Chlorogensäure, Albiziasaponin, Telosmosiden, Gaudichaudiosid, Mogrosiden, Hernandulcin, Glycyrrhetinsäure, Balansin A, Balansin B und deren Gemischen sowie deren Kalium-, Natrium-, Calcium- oder Ammoniumsalzen, sowie
(c) Zusatzstoffe ausgewählt aus der Gruppe bestehend aus Hesperetin, Hydroxyphenylalkadione, 4-Hydroxychalkone, Propenylphenylglycoside, Divanilline, Hydroxyflavane, 1-(2,4-Dihydroxy-phenyl)-3-(3-hydroxy-4-methoxy-phenyl)-propan-1-on, Neoisoflavonoide sowie deren Gemische enthalten,
wobei das Verhältnis des Sucroseäquivalenz der Konzentration des Stoffes oder der Stoffe der Komponente (b) zur Sucroseäquivalenz der Konzentration des Stoffes oder der Stoffe der Komponente (a) in der entsprechenden Aromamischung größer oder gleich zwei ist.

Überraschenderweise wurde gefunden, dass Mischungen der Komponenten (a), (b) und (c) das eingangs beschriebene Anforderungsprofil in ausgezeichneter Weise erfüllen. sofern die beiden Komponenten (a) und (b) das angegebene Sucroseäquivalenzverhältnis aufweisen.

Der Vorteil der erfindungsgemäßen Aromamischung besteht insbesondere darin, dass sie als Vor- oder Zwischenprodukt für oral konsumierbare Produkte besonders gut zu verwenden ist: Das eingestellte Sucrose-Äquivalenz-Verhältnis der Stoffe der Komponenten (a) und (b) eine synergistische Verstärkung des Süßeindruckes ermöglicht. Hierbei ist zu beachten, dass die Stoffe, die die Komponente (a) bilden, also einzelne Abrusoside, Mischungen von Abrusosiden und deren physiologisch vertretenen Salze, bereits in extrem geringen Konzentrationen eine sehr stark ausgeprägte Süßkraft und damit hohe Sucrose-Äquivalenz besitzen. Dies bedeutet, dass in den erfindungsgemäßen Aromamischungen die Konzentration der Stoffe der Komponente (b) regelmäßig um ein Vielfaches höher ist als die Konzentration der Stoffe, die die Komponente (a) bilden.

Der durch die erfindungsgemäße Aromamischung bzw. durch deren Verdünnungen erzeugbare Süßeindruck ist dabei deutlich höher als der (z.B. durch Sucrose-Äquivalenz messbare) Süßeindruck der Verbindungen der Komponenten (a) und (b) miteinander addiert. Es liegt somit ein überraschender synergistischer Effekt vor. Dabei ist dieser synergistische Effekt überraschenderweise sowohl im Bereich unterhalb als auch im Bereich oberhalb der Wahrnehmungsschwelle der einzelnen Abrusoside oder deren Mischungen zu beobachten (vgl. auch weiter unten).

### ABRUSOSIDE

Abrusoside, die die Komponente (a) bilden, folgen im Allgemeinen der Formel (I): 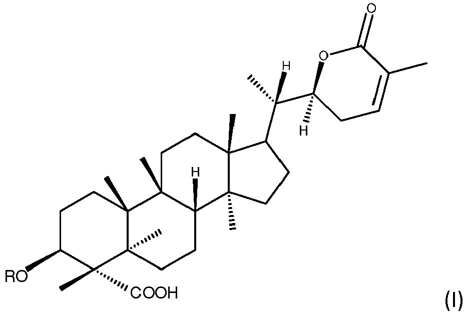 mit

| | |
|---|---|
| Abrusosid A | R= *β*-glc |
| Abrusosid B | R= *β*-glcA-6-CH₃²-β-glc |
| Abrusosid C | R= *β*-glc²-*β*-glc |
| Abrusosid D | R= *β*-glcA²-*β*-glc |
| Abrusosid E | R= *β*-glc²-*β*-glcA |

Abrusoside stellen Naturstoffe dar, die in Pflanzen der Art *Abrus* zu finden sind. Dabei handelt es sich um Sträucher, die meist klimmend oder mit überhängenden Zweigen wachsen und in Afrika und Südostasien beheimatet sind. Abrus-Arten, die als Rohstoffquelle für Abrusoside in Frage kommen, sind die folgenden:
- *Abrus aureus* R.Vig.;
- *Abrus baladensis* Thulin;
- *Abrus bottae* Deflers;
- *Abrus canescens* Baker;
- *Abrus diversifoliatus* Breteler;
- *Abrus fruticulosus* Wight & Arn.;
- *Abrus gawenensis* Thulin;
- *Abrus laevigatus* E.Mey.;
- *Abrus longibracteatus*
- *Abrus madagascariensis* R.Vig.;
- *Abrus parvifolius* (R.Vig.) Verdc.;
- *Abrus precatorius* L.
- *Abrus pulchellus* Thwaites;
- *Abrus sambiranensis* R.Vig.;
- *Abrus schimperi* Baker;
- *Abrus somalensis* Taub.;
- *Abrus wittei* Baker f..

Unter diesen Arten bevorzugt ist *Abrus fructiculosus* und *Abrus praecatorius*, auch als Paternostererbse bekannt. Letztere enthält jedoch das giftige Abrin, so dass hier besondere Vorsichtsmaßnahmen bei der Gewinnung der Abrusoside angebracht sind. Für den erfindungsgemäß bevorzugt einzusetzenden Extrakt aus *Abrus fruticulosus* (syn. *Abrus pulchellus*) und/ oder *Abrus precatorius* ist es bevorzugt, dass er mindestens 0,1 Gew.-% und höchstens 50 Gew.-%, bevorzugt 0,5 Gew.-% bis 30 Gew.-%, besonders bevorzugt 1 Gew.-% bis 25 Gew.-% Abrusoside bezogen auf das Trockengewicht des Extrakts enthält.

### EXTRAKTIONSVERFAHREN

Die Herstellung der Abrus-Extrakte kann in an sich bekannter Weise erfolgen, d.h. beispielsweise durch wässrigen, alkoholischen oder wässrig-alkoholischen Auszug der Pflanzen bzw. Pflanzenteile bzw. der Blätter oder Früchte. Geeignet sind alle herkömmlichen Extraktionsverfahren wie z.B. Mazeration, Remazeration, Digestion, Bewegungsmazeration, Wirbelextraktion, Ultraschallextraktion, Gegenstromextraktion, Perkolation, Reperkolation, Evakolation (Extraktion unter vermindertem Druck), Diakolation oder Festflüssig-Extraktion unter kontinuierlichem Rückfluss. Für den großtechnischen Einsatz vorteilhaft ist die Perkolationsmethode. Als Ausgangsmaterial können frische Pflanzen oder Pflanzenteile eingesetzt werden, üblicherweise wird jedoch von getrockneten Pflanzen und/oder Pflanzenteilen ausgegangen, die vor der Extraktion mechanisch zerkleinert werden können. Hierbei eignen sich alle dem Fachmann bekannten Zerkleinerungsmethoden, als Beispiel sei die Gefriermahlung genannt. Als Lösungsmittel für die Durchführung der Extraktionen können organische Lösungsmittel, Wasser (vorzugsweise heißes Wasser einer Temperatur von über 80 °C und insbesondere von über 95 °C) oder Gemische aus organischen Lösungsmitteln und Wasser, insbesondere niedermolekulare Alkohole mit mehr oder weniger hohen Wassergehalten, verwendet werden. Besonders bevorzugt ist die Extraktion mit Methanol, Ethanol, Pentan, Hexan, Heptan, Aceton, Propylenglykolen, Polyethylenglykolen, Ethylacetat oder deren Mischungen sowie deren wässrige Gemische. Die Extraktion erfolgt in der Regel bei 20 bis 100 °C, bevorzugt bei 30 bis 90 °C, insbesondere bei 60 bis 80 °C.

In einer bevorzugten Ausführungsform erfolgt die Extraktion unter Inertgasatmosphäre zur Vermeidung der Oxidation der Wirkstoffe des Extraktes. Dies ist insbesondere bei Extraktionen bei Temperaturen über 40 °C von Bedeutung. Die Extraktionszeiten werden vom Fachmann in Abhängigkeit vom Ausgangsmaterial, dem Extraktionsverfahren, der Extraktionstemperatur, vom Verhältnis Lösungsmittel zu Rohstoff u.a. eingestellt.

Nach der Extraktion können die erhaltenen Rohextrakte gegebenenfalls weiteren üblichen Schritten, wie beispielsweise Aufreinigung, Konzentration und/oder Entfärbung unterzogen werden. Falls wünschenswert, können die so hergestellten Extrakte beispielsweise einer selektiven Abtrennung einzelner unerwünschter Inhaltsstoffe, unterzogen werden. Die Extraktion kann bis zu jedem beliebigen Extraktionsgrad erfolgen, wird aber gewöhnlich bis zur Erschöpfung durchgeführt. Typische Ausbeuten (= Trockensubstanzmenge des Extraktes bezogen auf eingesetzte Rohstoffmenge) bei der Extraktion getrockneter Blätter liegen im Bereich von 3 bis 15, insbesondere 6 bis 10 Gew.-%.

Die vorliegende Erfindung umfasst die Erkenntnis, dass die Extraktionsbedingungen sowie die Ausbeuten der Endextrakte vom Fachmann ja nach gewünschtem Einsatzgebiet gewählt werden können. Diese Extrakte, die in der Regel Aktivsubstanzgehalte (= Feststoffgehalte) im Bereich von 0,5 bis 10 Gew.-% aufweisen, können als solche eingesetzt werden, es ist jedoch ebenfalls möglich, das Lösungsmittel durch Trocknung, insbesondere durch Sprüh- oder Gefriertrocknung vollständig zu entfernen, wobei ein intensiv rot gefärbter Feststoff zurückbleibt. Die Extrakte können auch als Ausgangsstoffe für die Gewinnung der oben genannten reinen Wirkstoffe dienen, sofern diese nicht auf synthetischem Wege einfacher und kostengünstiger hergestellt werden können. Demzufolge kann der Wirkstoffgehalt in den Extrakten 5 bis 100, vorzugsweise 50 bis 95 Gew.-% betragen. Die Extrakte selbst können als wässrige und/oder in organischen Solventien gelöste Zubereitungen sowie als sprüh- bzw. gefriergetrocknete, wasserfreie Feststoffe vorliegen. Als organische Lösungsmittel kommen in diesem Zusammenhang beispielsweise die aliphatischen Alkohole mit 1 bis 6 Kohlenstoffatomen (z.B. Ethanol), Ketone (z.B. Aceton), Halogenkohlenwasserstoffe (z.B. Chloroform oder Methylenchlorid), niedere Ester oder Polyole (z.B. Glycerin oder Glycole) in Frage.

Vorzugsweise werden die Abrus-Extrakte jedoch dadurch gewonnen, dass man die direkt nach der Ernte getrockneten Blätter der Pflanze
(a) mit einem geeigneten Lösungsmittel (z.B. Wasser, sub- oder superkritischem Wasser, superkritischem CO₂, Wasser-Ethanol-Gemische, Ethanol, Essigsäureethylester, n-Heptan, n-Hexan, wobei auch mineralische oder organische Säuren wie Phosphorsäure, Zitronensäure, Äpfelsäure, Bernsteinsäure, Essigsäure, Ameisensäure, Fumarsäure, Maleinsäure oder andere zugelassene Genusssäuren verwendet werden können) von 0°C bis zur Siedetemperatur des jeweiligen Lösungsmittels, unter Normaldruck, reduziertem oder erhöhtem Druck z.B. durch Soxhlet-, Gegenstrom-, Perkolations- oder einfaches Siebkorbverfahren extrahiert (Primärextrakt);
(b) den Primärextrakt gegebenenfalls durch destillative oder andere evaporative oder pervaporative Verfahren aufkonzentriert;
(c) gegebenenfalls einer Aufreinigung des konzentrierten Primärextraktes durch Gegenextraktion mit einem mit dem Primärlösungsmittel nicht mischbaren Lösungsmittel, Behandlung mit Adsorbentien (Kieselgel, Aktivkohle, Kieselgur, Alumina, basische oder saure oder neutrale lonentauscher) im Batch oder Säulenverfahren durchführt (Sekundärextrakt);
(d) den Sekundärextrakt durch evaporative oder pervaporative Verfahren trocknet; und
(e) fakultativ den getrockneten Sekundärextrakt wieder in geeignete Lösungsmittel oder Gemische aufnimmt (Ethanol, 1,2-Propylenglycol, Pflanzenöltriglyceride, Triacetin, Glycerin); und
mit mineralischen oder organische Säuren wie Phosphorsäure, Zitronensäure, Äpfelsäure, Bernsteinsäure, Essigsäure, Ameisensäure, Fumarsäure, Maleinsäure oder andere zugelassene Genusssäuren. Evaporative oder pervaporative Verfahren können z.B. Destillation, Sublimation, Wasserdampfdestillation, Gefriertrocknung, pervaporative Membranverfahren oder Sprühtrocknung sein, wobei dazu auch vor dieser Behandlung geeignete Hilfs- und Trägerstoffe zugesetzt werden können. Dabei wird das Verfahren dergestalt durchgeführt, dass der Extrakt 0,1 Gew.-% und höchstens 50 Gew.-%, bevorzugt 0,5 Gew.-% bis 30 Gew.-%, besonders bevorzugt 1 Gew.-% bis 25 Gew.-% Abrusoside enthält.

### SÜSSSTOFFE

Die weiteren Süßstoffe, die die Komponente (b) bilden können ausgewählt sein aus den folgenden Gruppen:
(a) Kohlenhydrate ausgewählt aus der Untergruppe bestehend aus Sucrose, Trehalose, Lactose, Maltose, Melizitose, Melibiose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd und Maltodextrin;
(b) natürlich vorkommende Polyole bzw. Zuckeralkohole ausgewählt aus der Untergruppe bestehend aus Glycerin, Erythritol, Threitol, Arabitol, Ribitol, Xylitol, Sorbitol, Mannitol, Maltitol, Isomaltit, Dulcitol und Lactitol. Die Kohlenhydrate können auch in Form von pflanzlichen Zubereitungen enthaltend eine oder mehrere der genannten Kohlenhydrate, vorzugsweise in einem Anteil von zumindest 5 Gew.-%, bevorzugt zumindest 15 Gew,-%) vorliegen. Die Kohlenhydrate können auch natürlich vorkommende oder künstlich hergestellte Mischung vorliegen (z.B. aus Honig, Invertzucker, Sirup, hochangereichtere Fructose-Sirup aus Maisstärke (High Fructose Corn Syrup);
(c) natürlich vorkommende Süßstoffe, ausgewählt aus der Untergruppe bestehend aus Miraculin, Curculin, Monellin, Mabinlin, Thaumatin, Curculin, Brazzein, Pentadin, D-Phenylalanin und D-Tryptophan;
(d) natürlich vorkommende Süßstoffe, ausgewählt aus der Untergruppe bestehend aus Steviosid, Steviolbiosid, Rebaudiosid A, weiteren Steviolglycosiden wie Rebaudiosid B, Rebaudiosid C, Rebaudiosid D, Rebaudiosid E, Rebaudiosid F, Rebaudiosid G, Rebaudiosid H, Dulcosid und/oder Rubusosid, Oslandin, Polypodosid A, Strogin 1, Strogin 2, Strogin 4, Selligueanin A, Dihydroquercetin-3-acetat, Perillartin, Telosmosid A₁₅, Periandrin I-V, Phyllodulcin, Pterocaryosiden, Cyclocaryosiden, Mukuroziosiden, trans-Anethol, trans-Cinnamaldehyd, Bryosiden, Bryonosiden, Bryonodulcosiden, Carnosiflosiden, Scandenosiden, Gypenosiden, Trilobatin, Phloridzin, Dihydroflavanolen, Hematoxylin, Cyanin, Chlorogensäure, Albiziasaponin, Telosmosiden, Gaudichaudiosid, Mogrosiden, Hernandulcin, Glycyrrhetinsäure, Balansin A, Balansin B; und
(e) den Kalium-, Natrium-, Calcium- oder Ammoniumsalzen der Mitglieder der Untergruppen a) bis d).

Die in der Untergruppe (d) genannten Süßstoffe können bevorzugt in Form von aus natürlichen Quellen gewonnenen Extrakten oder Fraktionen, enthaltend die süß schmeckenden Aminosäuren und/oder Proteine vorliegen.

Natürlich vorkommende Süßstoffe im Sinne der Erfindung sind nicht-nutritive oder nur in geringem Maße nutritive, vor allem süß schmeckende Verbindungen oder vor allem süß schmeckende natürliche Extrakte oder Isolate, wobei diese natürlichen Extrakte oder Isolate nicht die süß schmeckenden Kohlenhydrate, insbesondere Zucker oder Zuckeralkohole, in einer Menge umfassen, die ausreicht, um einen wahrnehmbaren süßen Geschmack in der Zubereitung auszulösen. Dabei müssen die Süßstoffe im Sinne der Erfindung alleine in der Lage sein, eine Süßkraft in der zu konsumierenden Zubereitung (Lebens-, Genussmittel) zu erzeugen, die der Süßkraft einer mindesten 4 %igen wässrigen Sucrose-Lösung entsprächen.

Die natürlich vorkommenden Süßstoffe können in der erfindungsgemäßen Aromamischungen auch eingesetzt werden in Form von Extrakten oder angereicherten Fraktionen dieser Extrakte, insbesondere Thaumatococcus-Extrakte (Katemfestaude), Extrakte aus *Stevia* ssp. (insbesondere *Stevia rebaudiana*), Swingle-Extrakt (*Momordica* bzw. *Siratia grosvenorii*, Luo-Han-Guo), Extrakte aus Süßholzwurzel, auch *Glycerrhyzia* ssp. (insb. *Glycerrhyzia glabra*), *Rubus* ssp. (insbesondere *Rubus suavissimus*), Citrus-Extrakte, Extrakte aus *Hydrangea macrophylla* var. *thunbergii* Makino, Extrakte aus *Lippia dulcis*, Extrakte aus *Mycetia balansae sowie* entsprechend angereicherte Fraktionen dieser Extrakte.

### SUCROSEÄQUIVALENZ

In einer besonders bevorzugten Ausführungsform der Erfindung kommen solche Zubereitungen zum Einsatz, bei denen das Verhältnis des Sucroseäquivalenz der Konzentration des Stoffes oder der Stoffe der Komponente (b) zur Sucroseäquivalenz der Konzentration des Stoffes oder der Stoffe der Komponente (a) im konfektionierten Endprodukt größer oder gleich zwei, vorzugsweise größer oder gleich drei, weiter bevorzugt größer oder gleich 4, besonders bevorzugt größer gleich 5 und insbesondere größer oder gleich 6 ist.

Das Sucrose-Äquivalenz-Verhältnis der Sucrose-Äquivalenz der Konzentration der Stoffe oder des Stoffes der Komponente (b) zu der Sucrose-Äquivalenz der Konzentration des Stoffes oder der Stoffe der Komponente (a) in der entsprechenden Aromamischung wird wie folgt festgestellt:
1. Es wird eine Vergleichsreihe verschiedener Sucrose-Konzentrationen in Wasser hergestellt. Bevorzugte Konzentrationen sind 0; 0,25; 0,5; 0,75; 1; 1,5; 2; 3; 4 und 5 Gew.-% Sucrose in Wasser. Gegebenenfalls können auch andere Konzentrationen, insbesondere höhere Konzentrationen für die Vergleichsreihe eingesetzt werden.
2. Es wird eine wässrige Lösung der süß schmeckenden Stoffe der Komponente (b) mit einer gleichen Konzentration dieser Stoffe wie in der zu untersuchenden Probe hergestellt (Lösung 1).
3. Es wird eine wässrige Lösung der Stoffe der Komponente (a) mit der gleichen Konzentration wie die der Stoffe der Komponente (a) in der zu untersuchenden Probe hergestellt (Lösung 2).
4. Ein Panel von mindestens 10 Personen (bevorzugt Personen, die im Bereich des Abschmeckens über Erfahrung verfügen, verschiedenen Alters, Herkunft und Geschlechts) testet die Lösung 1 gegenüber der Sucrose-Reihe und ordnet sie ein, um die Sucrose-Äquivalenz zu bestimmen.
5. Die ermittelte Sucrose-Äquivalenz ergibt sich aus dem Mittelwert der Einzeleinstufungen der einzelnen Panelisten.
6. Nun wird das Verdünnungsverhältnis bestimmt, mittels dessen die Lösung 1 auf eine Sucrose-Äquivalenz von 2 Gew.-% Sucrose in Wasser eingestellt werden kann. Dafür kann es sinnvoll sein, die Testprobe bereits vor dem Schritt 4 vorzuverdünnen. Selbstverständlich ist es sinnvoll, das ermittelte Verdünnungsverhältnis gegebenenfalls noch einmal durch die Panelisten prüfen zu lassen.
7. Nun wird die Lösung 2 (enthaltend die Verbindung(en) der Komponente (a) mit dem unter 6. ermittelten Verdünnungsverhältnis verdünnt.
8. Nachfolgend wird die verdünnte Lösung 2 ebenfalls gegen die Sucrose-Testreihe abgeschmeckt, von den Panelisten eingeordnet und ein entsprechender Sucrose-Äquivalenz-Wert bestimmt (analog zu den Punkten 4. und 5.)

Die Sucrose-Äquivalenz der verdünnten Lösung 1 (äquivalent zu 2 Gew.-% Sucrose in Wasser) wird in das Verhältnis zu der gemäß Schritt 8. bestimmten Sucrose-Äquivalenz der verdünnten Lösung 2 gesetzt. Dies ergibt das Sucrose-Äquivalenz-Verhältnis

### ZUSATZSTOFFE

Die erfindungsgemäßen Aromamischungen enthalten als Komponente (c) Aroma- und/oder Geschmackstoffe, die den süßen Geschmack verstärken und ausgewählt sind aus der Gruppe, die gebildet wird von Hesperetin, Hydroxyphenylalkadione, 4-Hydroxychalkone, Propenylphenylglycoside, Divanilline, Hydroxyflavane, 1-(2,4-Dihydroxy-phenyl)-3-(3-hydroxy-4-methoxy-phenyl)-propan-1-on, Neoisoflavonoide sowie deren Gemische.

Überraschenderweise hat sich gezeigt, dass sich zusätzlich zu dem durch eines oder mehrere Abrusoside bzw. deren Salze hervorgerufenen synergistischen Effekt der Süßverstärkung ein weiterer synergistischer Effekt mit weiteren aus dem Stand der Technik bekannten Süßverstärkern ergibt.

Die erfindungsgemäßen Produkte können wie gesagt ein oder mehrere Divanilline enthalten, insbesondere solche wie beschrieben in der WO 2004/078302 A1, dabei bevorzugt ist 6,6'-Dihydroxy-5,5'-dimethoxy-biphenyl-3,3'-dicarbaldehyd. In erfindungsgemäßen Produkte können ein oder mehrere natürlich vorkommende 4-Hydroxydihydrochalcone gemäß Komponente (c) enthalten sein, insbesondere solche wie beschrieben in WO 2007/107596 A1 und EP 1972203 A1. Bevorzugt sind insbesondere 3-(4-Hydroxyphenyl)-1-(2,4-dihydroxyphenyl)propan-1-on (Davidigenin) und/oder 3-(4-Hydroxyphenyl)-1-(2,4,6-trihydroxyphenyl)propan-1-on (Phloretin). Hesperitin im Sinne eines Bestandteils der Komponente (c) einer erfindungsgemäßen Aromamischung kann insbesondere das (2S)-Enantiomer, das (2R)-Enantiomer oder eine Mischung dieser Enantiomere sein, wie insbesondere in der WO 2007/014879 A1 beschrieben.

In einer erfindungsgemäßen Aromamischung können bevorzugt gemäß Komponente (c) als Propenylphenylglycosid (Chavicolglycosid) enthalten sein, die alpha- oder beta-Anomere und ganz besonders die beta-Anomere des 1-0-[4-(Propen-2-enyl)phenyl]-D-glucopyranosids (Chavicolglucosid), 1-0-[4-(Propen-2-enyl)phenyl]-6-0-β-D-apiofuranosyl-D-glucopyranosids (Furcatin), 1-0-[4-(Propen-2-enyl)phenyl]-6-0-β-D-rutinosids und/oder des 1-0-[4-(Propen-2-enyl)phenyl]-O-β-D-xylopyranosyl-(1-6)-β-D-glucopyranosids (p-Allylphenylprimeverosid, Miyaginin).

Als Hydroxyphenylalkandion ist Isogingerdion-2 bevorzugt. Als Hydroxyflavan ist 3',7-Dihydroxy-4'-methoxyflavan und/oder (S)-3',7-Dihydroxy-4'-methoxyflavan bevorzugt. Die erfindungsgemäßen Produkte können als Komponente (c) auch Phyllodulcin oder Extrakte enthaltend Phyllodulcin aufweisen, wie sie beispielsweise in EP 2298084 A1 beschrieben sind.

### ZUBEREITUNGEN ZUR ORALEN AUFNAHME

Unter oralen Zubereitungen, die ebenfalls Gegenstand der vorliegenden Erfindung sind und die oben beschriebenen Aromamischungen enthalten, werden im Folgenden nicht nur solche Produkte verstanden, die der menschlichen Ernährung dienen, sondern auch solche Mittel, die mit der Mundschleimhaut in Kontakt kommen. Somit umfasst diese Bezeichnung Nahrungsmittel auf der einen und Mund- und Zahnreinigungs- und -pflegemittel sowie oral verabreichte pharmazeutische Mittel auf der anderen Seite.

Vorzugsweise handelt es sich bei den oralen Zubereitung um Backwaren, beispielsweise Brot, Trockenkekse, Kuchen, sonstiges Gebäck, Süßwaren (beispielsweise Schokoladen, Schokoladenriegelprodukte, sonstige Riegelprodukte, Fruchtgummi, Hart- und Weichkaramellen, Kaugummi), alkoholische oder nicht-alkoholische Getränke (beispielsweise Kaffee, Tee, Eistee, Wein, weinhaltige Getränke, Bier, bierhaltige Getränke, Liköre, Schnäpse, Weinbrände, (carbonisierte) fruchthaltige Limonaden, (carbonisierte) isotonische Getränke, (carbonisierte) Erfrischungsgetränke, Nektare, Schorlen, Obst- und Gemüsesäfte, Frucht- oder Gemüsesaftzubereitungen, Instantgetränke (beispielsweise Instant-Kakao-Getränke, Instant-Tee-Getränke, Instant-Kaffeegetränke, Instant-Fruchtgetränke), Fleischprodukte (beispielsweise Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (beispielsweise Frühstückscerealien, Müsliriegel, vorgegarte Fertigreis-Produkte), Milchprodukte (beispielsweise Milchgetränke, Buttermilchgetränke, Milcheis, Joghurt, Kefir, Frischkäse, Weichkäse, Hartkäse, Trockenmilchpulver, Molke, Molkegetränke, Butter, Buttermilch, teilweise oder ganz hydrolisierte Milchprotein-haltige Produkte), Produkte aus Sojaprotein oder anderen Sojabohnen-Fraktionen (beispielsweise Sojamilch und daraus gefertigte Produkte, Fruchtgetränke mit Sojaprotein, Sojalecithin-haltige Zubereitungen, fermentierte Produkte wie Tofu oder Tempe oder daraus gefertigte Produkte), Produkte aus anderen pflanzlichen Proteinquellen, beispielsweise Haferprotein-Getränke, Fruchtzubereitungen (beispielsweise Konfitüren, Fruchteis, Fruchtsoßen, Fruchtfüllungen), Gemüsezubereitungen (beispielsweise Ketchup, Soßen, Trockengemüse, Tiefkühlgemüse, vorgegarte Gemüse, eingekochte Gemüse), Knabberartikel (beispielsweise gebackene oder frittierte Kartoffelchips oder Kartoffelteigprodukte, Extrudate auf Mais- oder Erdnussbasis), Produkte auf Fett- und Ölbasis oder Emulsionen derselben (beispielsweise Mayonnaise, Remoulade, Dressings), sonstige Fertiggerichte und Suppen (beispielsweise Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden.

Alternativ kommen Zahnpasten, Mundwässer, Erkältungsmittel oder Wirkstoffkapseln in Betracht.

Die oral konsumierbaren süß schmeckenden Produkte im Sinne der Erfindung können auch als Halbfertigware zur Herstellung weiterer oral konsumierbarer süß schmeckender Produkte dienen. Die oral konsumierbaren süß schmeckenden Produkte im Sinne der Erfindung können auch in Form von Kapseln, Tabletten (nichtüberzogene sowie überzogene Tabletten, beispielsweise magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Die in den oralen Zubereitungen eingesetzte Gesamtmenge der Komponenten (a) und (b) kann bezogen auf die konfektionierten Endprodukte etwa 0,01 bis etwa 1 und vorzugsweise etwa 0,05 bis 0,5 Gew.-% betragen.

### GESCHMACKSVERSTÄRKER

Diese Zubereitungen- wie auch die Aromamischungen- können des Weiteren zusätzliche Aromastoffe zum Verstärken eines salzigen, gegebenenfalls leicht sauren und/oder Umami-Geschmackseindrucks enthalten. Es werden somit die erfindungsgemäßen Produkte bzw. Aromamischungen in Kombination mit zumindest einer weiteren zur Verstärkung eines angenehmen Geschmackseindrucks (salzig, Umami, gegebenenfalls leicht sauer) geeigneten Substanz verwendet. Hierbei bevorzugt sind salzig schmeckende Verbindungen und salzverstärkende Verbindungen. Bevorzugte Verbindungen sind in der WO 2007/045566 A1 offenbart. Ferner bevorzugt sind Umami-Verbindungen wie in der WO 2008/046895 A1 und EP 1989944 A1 beschrieben sind.

Weiterhin können erfindungsgemäß bevorzugte Aromamischungen und Produkte auch Aromastoffe zur Maskierung von bitteren und/oder adstringierenden Geschmackseindrücken umfassen (Geschmackskorrigentien). Die (weiteren) Geschmackskorrigenzien werden z. B. aus der folgenden Liste ausgewählt: Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), weitere Hydroxyflavanone (z.B. Eriodictyol, Homoeriodictyol oder deren Natriumsalze), insbesondere gemäß US 2002/0188019, Hydroxybenzoesäureamide nach DE 10 2004 041 496 (z.B. 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid, 4-Hydroxybenzoesäure-N-(4-hydroxy-3-methoxybenzyl)amid, 2,4-Dihydroxybenzoesäure-N-(4-hydroxy-3-methoxybenzyl)amid-Mono-natriumsalz, 2,4-Dihydroxybenzoesäure-N-2-(4-hydroxy-3-methoxyphenyl)-ethylamid, 2,4-Dihydroxybenzoesäure-N-(4-hydroxy-3-ethoxybenzyl)amid, 2,4-Dihydroxybenzoesäure-N-(3,4-dihydroxybenzyl)amid und 2-Hydroxy-5-methoxy-N-[2-(4-hydroxy-3-methoxyphenyl)ethyl]amid (Aduncamid), 4-Hydroxybenzoesäurevanillylamid), bittermaskierende Hydroxydeoxybenzoine z.B. gemäß WO 2006/106023 (z.B. 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxyphenyl)ethanon), Aminosäuren (z.B. gamma-Aminobuttersäure nach WO 2005/096841 zur Verminderung oder Maskierung eines unangenehmen Geschmackseindrucks wie Bitterkeit), Äpfelsäureglycoside nach WO 2006/003107, salzig schmeckende Mischungen gemäß PCT/EP 2006/067120 Diacetyltrimere gemäß WO 2006/058893, Gemische von Molkeproteinen mit Lecithinen und/oder bittermaskierende Substanzen wie Gingerdione gemäß WO 2007/003527.

Bevorzugte Aromastoffe sind solche, die einen süßen Geruchseindruck verursachen, wobei der oder die weiteren Aromastoffe, die einen süßen Geruchseindruck verursachen, bevorzugt ausgewählt sind aus der Gruppe bestehend aus:

Vanillin, Ethylvanillin, Ethylvanillinisobutyrat (= 3-Ethoxy-4-isobutyryloxybenzaldehyd), Furaneol® (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al, 4-Hydroxyzimtsäure, 4-Methoxy-3-hydroxyzimtsäure, 3-Methoxy-4-hydroxyzimtsäure, 2-Hydroxyzimtsäure, 2,4-Dihydroxybenzoesäure, 3-Hydroxybenzoesäure, 3,4-Dihydroxybenzoesäure, Vanillinsäure, Homovanillinsäure, Vanillomandelsäure und Phenylacetaldehyd.

### WEITERE HILFS- UND ZUSATZSTOFFE

Beispiele üblicher Grund-, Hilfs- und Zusatzstoffe sind Wasser, Gemische frischer oder prozessierter, pflanzlicher oder tierischer Grund- oder Rohstoffe (beispielsweise rohes, gebratenes, getrocknetes, fermentiertes, geräuchertes und/oder gekochtes Fleisch, Knochen, Knorpel, Fisch, Gemüse, Früchte, Kräuter, Nüsse, Gemüse- oder Fruchtsäfte oder - pasten oder deren Gemische), verdauliche oder nicht verdauliche Kohlenhydrate (beispielsweise Dextrine, Amylose, Amylopektin, Inulin, Xylane, Cellulose), natürliche oder gehärtete Fette (beispielsweise Talg, Schmalz, Palmfett, Kokosfett, gehärtetes Pflanzenfett), Öle (beispielsweise Sonnenblumenöl, Erdnussöl, Maiskeimöl, Olivenöl, Fischöl, Sojaöl, Sesamöl), Fettsäuren oder deren Salze (beispielsweise Kaliumstearat), proteinogene oder nichtproteinogene Aminosäuren und verwandte Verbindungen (beispielsweise Taurin), Peptide, native oder prozessierte Proteine (beispielsweise Gelatine), Enzyme (beispielsweise Peptidasen), Nukleinsäuren, Nucleotide, andere als die vorbeschriebenen Geschmackskorrigenzien für unangenehme Geschmackseindrücke, Geschmackskorrigenzien für weitere, in der Regel nicht unangenehme Geschmackseindrücke, geschmacksmodulierende Stoffe (beispielsweise Inositolphosphat, Nucleotide wie Guanosinmonophosphat, Adenosinmonophosphat oder andere Stoffe wie Natriumglutamat oder 2-Phenoxypropionsäure), Emulgatoren (beispielsweise Lecithine, Diacylglycerole), Stabilisatoren (beispielsweise Carageenan, Alginat), Konservierungsstoffe (beispielsweise Benzoesäure, Sorbinsäure), Antioxidantien (beispielsweise Tocopherol, Ascorbinsäure), Chelatoren (beispielsweise Citronensäure), organische oder anorganische Säuerungsmittel (beispielsweise Äpfelsäure, Essigsäure, Citronensäure, Weinsäure, Phosphorsäure), zusätzliche Bitterstoffe (beispielsweise Chinin, Coffein, Limonin, Amarogentin, Humolone, Lupolone, Catechine, Tannine), mineralische Salze (beispielsweise Natriumchlorid, Kaliumchlorid, Magnesiumchlorid, Natriumphosphate), die enzymatische Bräunung verhindernde Stoffe (beispielsweise Sulfit, Ascorbinsäure), etherische Öle, Pflanzenextrakte, natürliche oder synthetische Farbstoffe oder Farbpigmente (beispielsweise Carotinoide, Flavonoide, Anthocyane, Chlorophyll und deren Derivate), Gewürze, synthetische, natürliche oder naturidentische Aromastoffe oder Riechstoffe sowie Geruchskorrigenzien.

### GETRÄNKE

Besonders bevorzugt sind süß schmeckende Getränke, die auch karbonisiert sein können, enthaltend
(a) einen Extrakt aus *Abrus fruticulosus* (syn. *Abrus* pulchellus) und/ oder Abrus precatorius, umfassend eines oder mehrere Abrusoside einer Konzentration, so dass bezogen auf das oral konsumierbare süß schmeckende Produkt mindestens 0,00005 Gew.-% (0,5 ppm) und höchstens 0,0015 Gew.-% (15 ppm) Phyllodulcin enthalten sind, wobei der Extrakt auch eine nicht-süße Aroma- und Geschmackseigenschaft zeigt,
(b) einen oder mehreren natürlich vorkommenden süß schmeckende Stoffe einschließlich deren physiologisch verträglicher Salze, vorzugsweise ausgewählt aus der Gruppe bestehend aus:
   (b1) Kohlenhydraten bzw. Zucker ausgewählt aus der Untergruppe bestehend aus Sucrose, D-Fructose, D-Glucose und hochangereicherte Fructose-Sirupe aus Maisstärke (High Fructose Corn Sirup) oder
   (b2) Süßstoffen ausgewählt aus der Untergruppe bestehend aus Steviosid, Rebaudiosid A und Rubusosid, wobei auch Extrakte oder angereicherte Fraktionen dieser Extrakte verwendet werden können, z.B. Stevia-Extrakte und *Rubus suavissimus-*Extrakte,
   (b3) natürlich vorkommende Süßstoffe, ausgewählt aus der Untergruppe bestehend aus Miraculin, Curculin, Monellin, Mabinlin, Thaumatin, Curculin, Brazzein, Pentadin, D-Phenylalanin und D-Tryptophan;
   (b4) natürlich vorkommende Süßstoffe, ausgewählt aus der Untergruppe bestehend aus Steviosid, Steviolbiosid, Rebaudiosid A, weiteren Steviolglycosiden wie Rebaudiosid B, Rebaudiosid C, Rebaudiosid D, Rebaudiosid E, Rebaudiosid F, Rebaudiosid G, Rebaudiosid H, Dulcosid und/oder Rubusosid, Oslandin, Polypodosid A, Strogin 1, Strogin 2, Strogin 4, Selligueanin A, Dihydroquercetin-3-acetat, Perillartin, Telosmosid A₁₅, Periandrin I-V, Phyllodulcin, Pterocaryosiden, Cyclocaryosiden, Mukuroziosiden, trans-Anethol, trans-Cinnamaldehyd, Bryosiden, Bryonosiden, Bryonodulcosiden, Carnosiflosiden, Scandenosiden, Gypenosiden, Trilobatin, Phloridzin, Dihydroflavanolen, Hematoxylin, Cyanin, Chlorogensäure, Albiziasaponin, Telosmosiden, Gaudichaudiosid, Mogrosiden, Hernandulcin, Glycyrrhetinsäure, Balansin A, Balansin B;
(c) einen oder mehrere süßverstärkende Aroma- und/oder Geschmackstoffe einschließlich deren physiologisch verträglichen Salze, ausgewählt aus der Gruppe bestehend aus Hesperetin, Phloretin, Phyllodulcin oder Extrakte enthaltend Phyllodulcin, Balansin A und/oder Balansin B oder Extrakte aus Mycetia balansae, enthaltend Balansin A und/oder Balansin B, 3',7-Dihydroxy-4'-methoxyflavan, (S)-3',7-Dihydroxy-4'-methoxyflavan, 1-(2,4-Dihydroxy-phenyl)-3-(3-hydroxy-4-methoxy-phenyl)-propan-1-on, Neoisoflavonoide und deren Gemischen sowie gegebenenfalls
(d) einen oder mehrere weitere Aroma-, Hilfs- oder Trägerstoffe.

Hierbei besteht vorzugsweise die Maßgabe, dass die Süße der genannten süß schmeckenden Stoffe in der Mischung in dem erfindungsgemäßen oral konsumierbaren süß schmeckenden Produkt sensorisch äquivalent zu einer mindestens 6 Gew.-%igen wässrigen Sucroselösung ist. Besonders bevorzugt ist dabei, dass die Summe der Konzentration der Verbindungen der Gruppen (b1) und/oder (b2) sensorisch äquivalent zu einer mindestens 5 %igen wässrigen Sucroselösung und die der Gruppe (b4) sensorisch äquivalent zu einer höchstens 1 %igen wässrigen Sucroselösung sind,

Bevorzugte erfindungsgemäße süß schmeckende Getränke sind gegebenenfalls karbonisierte, säure- und fruchthaltige Limonaden (beispielsweise Orangen-, Limonen- oder Zitronentyp), karbonisierte isotonische Getränke (beispielsweise Orangen-, Limonen oder Zitronentyp), karbonisierte, saure Erfrischungsgetränke (beispielsweise Cola-, Zitrone-, Orange-, Limone-, Kirsch-, Apfel-, Vanille-Typ oder deren Mischung), karbonisierte Schorlen, karbonisierte Obst- und Gemüsesäfte, karbonisierte Frucht- oder Gemüsesaftzubereitungen. Dabei bedeutet karbonisiert im Sinne der Erfindung, dass das Getränk natürlich (z.B. aus Gärungsprozessen wie bei der Bierherstellung oder durch Wasser aus Kohlendioxid-haltigen Mineralquellen) eingetragenes Kohlendioxid enthält oder diesem Kohlendioxid während des Herstell- und/oder Abfüllprozesses zugesetzt wurde.

Bevorzugte Hilfs- oder Trägerstoffe sind Maltodextrin, Stärke, natürliche oder künstliche Polysaccharide und/oder Pflanzengummen wie modifizierte Stärken oder Gummi Arabicum, für die Aromamischungen zugelassene Lösungsmittel wie beispielsweise Ethanol, 1,2-Propylenglycol, Wasser, Glycerin, Triacetin, Pflanzenöltriglyceride, färbende Mittel, beispielsweise zugelassene Lebensmittelfarbstoffe, färbende Pflanzenextrakte, Stabilisitoren, Konservierungsstoffe, Antioxidantien und viskositäte-beeinflussende Stoffe.

Ein bevorzugtes erfindungsgemäß oral konsumierbares süß schmeckendes Produkt enthält die Komponenten der Gruppe
(a) mindestens 0,5 ppm und höchstens 15 ppm Abrusoside,
(b1) von etwa 1 bis etwa 90 Gew.-%, bevorzugt etwa 5 bis etwa 30 Gew.-%,
(b2) von etwa 1 bis etwa 90 Gew.-%, bevorzugt etwa 1 bis etwa 20 Gew.-%,
(b3) von etwa 0,001 bis etwa 1 Gew.-%, bevorzugt etwa 0,01 bis etwa 0,5 Gew.-%,
(b4) von etwa 0,0001 bis etwa 0,5 Gew.-%, bevorzugt etwa 0,0001 bis etwa 0,1 Gew.-%;
(c) von etwa 0,0001 bis etwa 0,1 Gew.-%, bevorzugt etwa 0,0005 bis etwa 0,05 Gew.-%; und
(d) von 0 bis etwa 99 Gew.-%, bevorzugt von etwa 10 bis etwa 95 Gew.-%
jeweils bezogen auf das Gewicht des gesamten, oral konsumierbaren süß schmeckenden Produkts und mit der Maßgabe, dass sich die Mengenangaben zu 100 Gew.-% ergänzen.

Besonders bevorzugte oral konsumierbare süß schmeckende Produkte im Sinne der Erfindung sind alkoholische Getränke wie Biermixgetränke, Weinmixgetränke oder sonstige, maximal 5 Vol.-% Alkohol enthaltende Mischgetränke und/oder nichtalkoholische Getränke wie Tee, Eistee (gesüßt, beispielsweise auch mit Kräuteraromen oder Fruchtaromen vom Typ Zitrone, Orange), (carbonisierte) fruchthaltige Limonaden (beispielsweise Orangen-, Limonen- oder Zitronentyp), (carbonisierte) isotonische Getränke (beispielsweise Orangen-, Limonen oder Zitronentyp), (carbonisierte) Erfrischungsgetränke (beispielsweise Cola-, Zitrone-, Orange-, Limone-, Kirsch-, Apfel-, Vanille-Typ oder deren Mischung), Nektare, Schorlen, Milchgetränke, Buttermilchgetränke, Joghurt, Kefir, Molkegetränke, Sojamilch und daraus gefertigte Produkte, Fruchtgetränke mit Sojaprotein, Haferprotein-Getränke, und Instantgetränke (beispielsweise Instant-Kakao-Getränke, Instant-Tee-Getränke, Instant-Kaffee-getränke, Instant-Fruchtgetränke), sogenannte aromatisierte Wässer ("Near Water"-Getränke, wobei letztere eine Süßung haben müssen.

"Near Water"-Getränke im Sinne dieses Textes sind (karbonisierte) Getränke auf (Mineral-)Wasserbasis, die meist klar sind, nur schwach gefärbt werden, oft nur schwach gesüßt sind (weniger als 5 % Sucrose oder Süßstoffe mit einer Süßkraft von weniger als 5 % Sucrose), meist gar nicht oder nur schwach angesäuert sind und dabei einen pH-Bereich von ca. 4 bis 8 umfassen meist nur aromatisiert sind und dabei noch mit Mineralien, Vitaminen und/oder Pflanzenextrakten versehen werden können. Im Gegensatz zu den meisten andere Getränken (z.B. Limonaden, Fruchtsaftgetränken, [Eis-]Teegetränken u.s.w.) steht dabei der "Wasser"-Charakter des Getränks immer noch im Vordergrund.

Bevorzugt sind dabei die Getränke, die einen pH-Wert kleiner 7, besonders bevorzugt kleiner 5, insbesondere bevorzugt kleiner 4 haben.

### MUND- UND ZAHNPFLEGEMITTEL

Erfindungsgemäße oral konsumierbare süß schmeckende Produkte können auch der Mund- und Zahnreinigung und-pflege dienen. Beispiele hierfür sind Zahnpasten, Zahngele, Zahnpulver, Mundwässer und dergleichen. Unter Zahnpasten oder Zahncremes werden im allgemeinen gelförmige oder pastöse Zubereitungen aus Wasser, Verdickungsmitteln, Feuchthaltemitteln, Schleif- oder Putzkörpern, Tensiden, Süßmitteln, Aromastoffen, deodorierenden Wirkstoffen sowie Wirkstoffen gegen Mund- und Zahnerkrankungen verstanden. In die erfindungsgemäßen Zahnpasten können alle üblichen Putzkörper, wie z. B. Kreide, Dicalciumphosphat, unlösliches Natriummetaphosphat, Aluminiumsilikate, Calciumpyrophosphat, feinteilige Kunstharze, Kieselsäuren, Aluminiumoxid und Aluminiumoxidtrihydrat eingesetzt werden.

Bevorzugt geeignete **Putzkörper** für die erfindungsgemäßen Zahnpasten sind vor allem feinteilige Xerogelkieselsäuren, Hydrogelkieselsäuren, Fällungskieselsäuren, Aluminiumoxid-trihydrat und feinteiliges alpha -Aluminiumoxid oder Mischungen dieser Putzkörper in Mengen von 15 bis 40 Gew.-% der Zahnpasta.

Als **Feuchthaltemittel** kommen vorwiegend niedermolekulare Polyethylenglykole, Glycerin, Sorbit oder Mischungen dieser Produkte in Mengen bis zu 50 Gew.-% in Frage. Unter den bekannten Verdickungsmitteln sind die verdickenden, feinteiligen Gelkieselsäuren und Hydrokolloide, wie z. B. Carboxymethylcellulose, Hydroxyethylcellulose, Hydroxypropy-Iguar, Hydroxyethylstärke, Polyvinylpyrrolidon, hochmolekulares Polyethylenglykol, Pflanzengummen wie Traganth, Agar-Agar, Carragheenmoos, Gummiarabicum, Xantham-Gum und Carboxyvinylpolymere (z. B. Carbopol®-Typen) geeignet.

Zusätzlich können die Mund- und Zahnpflegemittel insbesondere oberflächenaktive Stoffe, bevorzugt anionische und nichtionische schaumstarke Tenside, wie die bereits oben genannten Stoffe, insbesondere aber Alkylethersulfat-Salze, Alkylpolyglucoside und deren Gemische.Weitere übliche Zahnpastenzusätze sind:
- Konservierungsmittel und antimikrobielle Stoffe wie z. B. p- Hydroxybenzösäuremethyl-, -ethyl- oder -propylester, Natriumsorbat, Natriumbenzoat, Bromchlorophen, Phenylsalicylsäureester, Thymol und dergleichen;
- Antizahnsteinwirkstoffe, z. B. Organophosphate wie 1-Hydroxyethan- 1.1-diphosphonsäure, 1-Phosphonpropan-1,2,3-tricarbonsäure und andere, die z. B. aus US 3,488,419**,** DE 2224430 A1 und DE 2343196 A1 bekannt sind;
- andere karieshemmende Stoffe wie z. B. Natriumfluorid, Natriummonofluorphosphat, Zinnfluorid;
- Süssungsmittel, wie z. B. Saccharin-Natrium, Natrium-Cyclamat, Sucrose, Lactose, Maltose, Fructose oder Apartam®, (L-Aspartyl- L-phenylalanin-methylester), Stivia-extrakte oder deren süßenden Bestandteile, insbesondere Ribeaudioside;
- geschmacksmodulierende Stoffe (beispielsweise Inositolphosphat, Nucleotide wie Guanosinmonophosphat, Adenosinmonophosphat oder andere Stoffe wie Natriumglutamat oder 2-Phenoxypropionsäure),
- Kühlwirkstoffen wie beispielsweise Menthol, Mentholderivate (beispielsweise L-Menthol, L-Menthyllactat, L-Menthylalkylcarbonate, Menthonketale, Menthancarbonsäureamide), 2,2,2-Trialkylessigsäureamiden (beispielsweise 2,2-Diisopropylpropionsäuremethylamid), Icilin-Derivate,
- Zusätzliche Aromen wie z. B. Eukalyptusöl, Anisöl, Fenchelöl, Kümmelöl, Methylacetat, Zimtaldehyd, Anethol, Vanillin, Thymol sowie Mischungen dieser und anderer natürlicher und synthetischer Aromen;
- Pigmente wie z. B. Titandioxid;
- Farbstoffe;
- Puffersubstanzen wie z. B. primäre, sekundäre oder tertiäre Alkaliphosphate oder Citronensäure/Natriumcitrat;
- wundheilende und entzündungshemmende Stoffe wie z. B. Allantoin, Harnstoff, Azulen, Kamillenwirkstoffe und Acetylsalicylsäurederivate.

Eine bevorzugte Ausführung der kosmetischen Zubereitungen sind Zahnpasten in Form einer wässrigen, pastösen Dispersion, enthaltend Poliermittel, Feuchthaltemittel, Viskositätsregulatoren und gegebenenfalls weitere übliche Komponenten, sowie die Mischung aus Menthofuran und Mentholverbindungen in Mengen von 0,5 bis 2 Gew.-% enthalten.

In Mundwässern ist eine Kombination mit wässrig-alkoholischen Lösungen verschiedener Grädigkeit von ätherischen Ölen, Emulgatoren, adstringierenden und tonisierenden Drogenauszügen, zahnsteinhemmenden, antibakteriellen Zusätzen und Geschmackskorrigentien ohne weiteres möglich. Eine weitere bevorzugte Ausführung der Erfindung ist ein Mundwasser in Form einer wässrigen oder wässrig-alkoholischen Lösung enthaltend die Mischung aus Menthofuran und Mentholverbindungen in Mengen von 0,5 bis 2 Gew.-%. In Mundwässern, die vor der Anwendung verdünnt werden, können mit, entsprechend dem vorgesehenen Verdünnungsverhältnis, höheren Konzentrationen ausreichende Effekte erzielt werden.

Zur Verbesserung des Fließverhaltens können ferner **Hydrotrope**, wie beispielsweise Ethanol, Isopropylalkohol, oder Polyole eingesetzt werden; diese Stoffe entsprechen weitgehend den eingangs geschildern Trägern. Polyole, die hier in Betracht kommen, besitzen vorzugsweise 2 bis 15 Kohlenstoffatome und mindestens zwei Hydroxylgruppen. Die Polyole können noch weitere funktionelle Gruppen, insbesondere Aminogruppen, enthalten bzw. mit Stickstoff modifiziert sein. Typische Beispiele sind
- Glycerin;
- Alkylenglycole, wie beispielsweise Ethylenglycol, Diethylenglycol, Propylenglycol, Butylenglycol, Hexylenglycol sowie Polyethylenglycole mit einem durchschnittlichen Molekulargewicht von 100 bis 1.000 Dalton;
- technische Oligoglyceringemische mit einem Eigenkondensationsgrad von 1,5 bis 10 wie etwa technische Diglyceringemische mit einem Diglyceringehalt von 40 bis 50 Gew.-%;
- Methyolverbindungen, wie insbesondere Trimethylolethan, Trimethylolpropan, Trimethylolbutan, Pentaerythrit und Dipentaerythrit;
- Niedrigalkylglucoside, insbesondere solche mit 1 bis 8 Kohlenstoffen im Alkylrest, wie beispielsweise Methyl- und Butylglucosid;
- Zuckeralkohole mit 5 bis 12 Kohlenstoffatomen, wie beispielsweise Sorbit oder Mannit,
- Zucker mit 5 bis 12 Kohlenstoffatomen, wie beispielsweise Glucose oder Saccharose;
- Aminozucker, wie beispielsweise Glucamin;
- Dialkoholamine, wie Diethanolamin oder 2-Amino-1,3-propandiol.

Als Konservierungsmittel eignen sich beispielsweise Phenoxyethanol, Formaldehydlösung, Parabene, Pentandiol oder Sorbinsäure sowie die unter der Bezeichnung Surfacine® bekannten Silberkomplexe und die in Anlage 6, Teil A und B der Kosmetikverordnung aufgeführten weiteren Stoffklassen.

Als **Parfümöle** seien genannt Gemische aus natürlichen und synthetischen Riechstoffen. Natürliche Riechstoffe sind Extrakte von Blüten (Lilie, Lavendel, Rosen, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orangen), Wurzeln (Macis, Angelica, Sellerie, Kardamon, Costus, Iris, Calmus), Hölzern (Pinien-, Sandel-, Guajak-, Zedern-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z.B. die Jonone, α-Isomethylionon und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z.B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labolanumöl und Lavandinöl. Vorzugsweise werden Bergamotteöl, Dihydromyrcenol, Lilial, Lyral, Citronellol, Phenylethylalkohol, α-Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglycolat, Cyclovertal, Lavandinöl, Muskateller Salbeiöl, β-Damascone, Geraniumöl Bourbon, Cyclohexylsalicylat, Vertofix Coeur, Iso-E-Super, Fixolide NP, Evernyl, Iraldein gamma, Phenylessigsäure, Geranylacetat, Benzylacetat, Rosenoxid, Romilllat, Irotyl und Floramat allein oder in Mischungen, eingesetzt.

Als **Aromen** kommen beispielsweise Pfefferminzöl, Krauseminzöl, Anisöl, Sternanisöl, Kümmelöl, Eukalyptusöl, Fenchelöl, Citronenöl, Wintergrünöl, Nelkenöl, Menthol und dergleichen in Frage.

### KAUGUMMIS

Bei den bevorzugten oralen Zubereitungen kann es sich auch um Kaugummis handeln. Diese Produkte enthalten typischerweise eine wasserunlösliche und eine wasserlösliche Komponente.

Die wasserunlösliche Basis, die auch als "Gummibasis" bezeichnet wird. umfasst üblicherweise natürliche oder synthetische Elastomere, Harze, Fette und Öle, Weichmacher, Füllstoffe, Farbstoffe sowie gegebenenfalls Wachse. Der Anteil der Basis an der Gesamtzusammensetzung macht üblicherweise 5 bis 95, vorzugsweise 10 bis 50 und insbesondere 20 bis 35 Gew.-% aus. In einer typischen Ausgestaltungsform der Erfindung setzt sich die Basis aus 20 bis 60 Gew.-% synthetischen Elastomeren, 0 bis 30 Gew.-% natürlichen Elastomeren, 5 bis 55 Gew.-% Weichmachern, 4 bis 35 Gew.-% Füllstoffe und in untergeordneten Mengen Zusatzstoffe wie Farbstoffe, Antioxidantien und dergleichen zusammen, mit der Maßgabe, dass sie allenfalls in geringen Mengen wasserlöslich sind.

Als geeignete synthetische Elastomere kommen beispielsweise Polyisobutylene mit durchschnittlichen Molekulargewichten (nach GPC) von 10.000 bis 100.000 und vorzugsweise 50.000 bis 80.000, Isobutylen-Isopren-Copolymere ("Butyl Elastomere"), Styrol-Butadien-Copolymere (Styrol:Butadien-Verhältnis z.B. 1: 3 bis 3: 1), Polyvinylacetate mit durchschnittlichen Molekulargewichten (nach GPC) von 2.000 bis 90.000 und vorzugsweise 10.000 bis 65.000, Polyisoprene, Polyethylen, Vinylacetat-Vinyllaurat-Copolymere und deren Gemische. Beispiele für geeignete natürliche Elastomere sind Kautschuks wie etwa geräucherter oder flüssiger Latex oder Guayule sowie natürliche Gummistoffe wie Jelutong, Lechi caspi, Perillo, Sorva, Massaranduba balata, Massaranduba chocolate, Nispero, Rosindinba, Chicle, Gutta hang 1kang sowie deren Gemische. Die Auswahl der synthetischen und natürlichen Elastomere und deren Mischungsverhältnisse richtet sich im Wesentlichen danach, ob mit den Kaugummis Blasen erzeugt werden sollen ("bubble gums") oder nicht. Vorzugsweise werden Elastomergemische eingesetzt, die Jelutong, Chicle, Sorva und Massaranduba enthalten.

In den meisten Fällen erweisen sich die Elastomere in der Verarbeitung als zu hart oder zu wenig verformbar, so dass es sich als vorteilhaft erwiesen hat, spezielle Weichmacher mitzuverwenden, die natürlich insbesondere auch alle Anforderungen an die Zulassung als Nahrungsmittelzusatzstoffe erfüllen müssen. In dieser Hinsicht kommen vor allem Ester von Harzsäuren in Betracht, beispielsweise Ester von niederen aliphatischen Alkoholen oder Polyolen mit ganz oder teilweise gehärteten, monomeren oder oligomeren Harzsäuren. Insbesondere werden für diesen Zweck die Methyl-, Glycerin-, oder Pentareythritester sowie deren Gemische eingesetzt. Alternativ kommen auch Terpenharze in Betracht, die sich von alpha-Pinen, beta-Pinen, delta-Limonen oder deren Gemischen ableiten können.

Als Füllstoffe oder Texturiermittel kommen Magnesium- oder Calciumcarbonat, gemahlener Bimsstein, Silicate, speziell Magnesium- oder Aluminiumsilicate, Tone, Aluminiumoxide. Talkum, Titandioxid, Mono-, Di- und Tricalciumphosphat sowie Cellulosepolymere.

Geeignete Emulgatoren sind Talg, gehärteter Talg, gehärtete oder teilweise gehärtete pflanzliche Öle, Kakaobutter, Partialglyceride, Lecithin, Triacetin und gesättigte oder ungesättigte Fettsäuren mit 6 bis 22 und vorzugsweise 12 bis 18 Kohlenstoffatomen sowie deren Gemische.

Als Farbstoffe und Weißungsmittel kommen beispielsweise die für die Färbung von Lebensmitteln zugelassenen FD und C-Typen, Pflanzen- und Fruchtextrakte sowie Titandioxid in Frage.

Die Basismassen können Wachse enthalten oder wachsfrei sein; Beispiele für wachsfreie Zusammensetzungen finden sich unter anderem in der Patentschrift US 5,286,500**,** auf deren Inhalt hiermit ausdrücklich Bezug genommen wird.

Zusätzlich zu der wasserunlöslichen Gummibasis enthalten Kaugummizubereitungen regelmäßig einen wasserlösliche Anteil, der beispielsweise von Softener, Süßstoffen, Füllstoffen, Geschmacksstoffen, Geschmacksverstärkern, Emulgatoren, Farbstoffen, Säuerungsmitteln, Antioxidantien und dergleichen gebildet werden, hier mit der Maßgabe, dass die Bestandteile eine wenigstens hinreichende Wasserlöslichkeit besitzen. In Abhängigkeit der Wasserlöslichkeit der speziellen Vertreter können demnach einzelne Bestandteile sowohl der wasserunlöslichen wie auch der wasserlöslichen Phase angehören. Es ist jedoch auch möglich, Kombinationen beispielsweise eines wasserlöslichen und eines wasserunlöslichen Emulgators einzusetzen, wobei sich die einzelnen Vertreter, dann in unterschiedlichen Phasen befinden. Üblicherweise macht der wasserunlösliche Anteil 5 bis 95 und vorzugsweise 20 bis 80 Gew.-% der Zubereitung aus.

Wasserlösliche Softener oder Plastifiziermittel werden den Kaugummizusammensetzungen hinzugegeben um die Kaubarkeit und das Kaugefühl zu verbessern und sind in den Mischungen typischerweise in Mengen von 0,5 bis 15 Gew.-% zugegen. Typische Beispiele sind Glycerin, Lecithin sowie wässrige Lösungen von Sorbitol, gehärteten Stärkehydrolysaten oder Kornsirup.

Als Süßstoffe kommen sowohl zuckerhaltige wie zuckerfreie Verbindungen in Frage, die in Mengen von 5 bis 95, vorzugsweise 20 bis 80 und insbesondere 30 bis 60 Gew.-% bezogen auf die Kaugummizusammensetzung eingesetzt werden. Typische Saccharid-Süssstoffe sind Sucrose, Dextrose, Maltose, Dextrin, getrockneter Invertzucker, Fructose, Levulose, Galactose, Kornsirup sowie deren Gemische. Als Zuckerersatzstoffe kommen Sorbitol, Mannitol, Xylitol, gehärtete Stärkehydrolysate, Maltitol und deren Gemische in Frage. Weiterhin kommen als Zusatzstoffe auch sogenannte HIAS ("High Intensity Articifical Sweeteners") in Betracht, wie beispielsweise Sucralose, Aspartam, Acesulfamsalze, Alitam, Saccharin und Saccharinsalze, Cyclamsäure und deren Salze, Glycyrrhizine, Dihydrochalcone, Thaumatin, Monellin und dergleichen alleine oder in Abmischungen. Besonders wirksam sind auch die hydrophoben HIAS, die Gegenstand der internationalen Patentanmeldung WO 2002 091849 A1 (Wrigleys) sowie Stevia Extrakte und deren aktiven Bestandteile, insbesondere Ribeaudiosid A sind. Die Einsatzmenge dieser Stoffe hängt in erster Linie von ihrem Leistungsvermögen ab und liegt typischerweise im Bereich von 0,02 bis 8 Gew.-%.

Insbesondere für die Herstellung kalorienarmer Kaugummis eignen sich Füllstoffe wie beispielsweise Polydextrose, Raftilose, Rafitilin, Fructooligosaccharide (NutraFlora), Palatinoseoligosaaccharide, Guar Gum Hydrolysate (Sun Fiber) sowie Dextrine.

Die Auswahl an weiteren Geschmacksstoffen ist praktisch unbegrenzt und für das Wesen der Erfindung unkritisch. Üblicherweise liegt der Gesamtanteil aller Geschmacksstoffe bei 0,1 bis 15 und vorzugsweise 0,2 bis 5 gew.-% bezogen auf die Kaugummizusammensetzung. Geeignete weitere Geschmacksstoffe stellen beispielsweise essentielle Öle, synthetische Aromen und dergleichen dar, wie etwa Anisöl, Sternanisöl, Kümmelöl, Eukalyptusöl, Fenchelöl, Citronenöl, Wintergrünöl, Nelkenöl, und dergleichen, wie sie auch beispielsweise in Mund- und Zahnpflegemittel Verwendung finden.

Die Kaugummis können des weiteren Hilfs- und Zusatzstoffe enthalten, die beispielsweise für die Zahnpflege, speziell zur Bekämpfung von Plaque und Gingivitis geeignet sind, wie z.B. Chlorhexidin, CPC oder Trichlosan. Weiter können pH-Regulatoren (z.B. Puffer oder Harnstoff), Wirkstoffe gegen Karies (z.B. Phosphate oder Fluoride), biogene Wirkstoffe (Antikörper, Enzyme, Koffein, Pflanzenextrakte) enthalten sein, solange diese Stoffe für Nahrungsmittel zugelassen sind und nicht in unerwünschter Weise miteinander in Wechselwirkung treten.

### PHARMAZEUTISCHE ZUBEREITUNGEN

Sofern die oralen Zubereitungen pharmazeutische Mittel darstellen, umfassen diese einen pharmazeutischen Wirkstoff. Vorteilhafte pharmazeutische Wirkstoffe sind beispielsweise steroidale entzündungshemmende Substanzen vom Kortikosteroiden-Typ wie beispielsweise Hydrocortison, Hydrocortison-Derivate wie Hydrocortison-17-butyrat, Dexamethason, Dexamethasonphosphat, Methylprednisolon oder Cortison.

Vorteilhafte nichtsteroidale pharmazeutische Wirkstoffe sind beispielsweise Entzündungshemmer wie Oxicame wie Piroxicam oder Tenoxicam; Salicylate wie Aspirin® (Acetylsalicylsäure), Disalcid, Solprin oder Fendosal; Essigsäure-Derivate wie Diclofenac, Fenclofenac, Indomethacin, Sulindac, Tolmetin, oder Clindanac; Fenamate wie Mefenamic, Meclofenamic, Flufenamic oder Niflumic; Propionsäure-Derivate wie Ibuprofen, Naproxen, Flurbiprofen, Benoxaprofen oder Pyrazole wie Phenylbutazon, Oxyphenylbutazon, Febrazon oder Azapropazon.

Besonders bevorzugte pharmazeutische Zubereitungen sind nicht verschreibungspflichtige Produkte und frei verkäufliche Arzneimittel, sogenannte OTC ("over the counter") - Präparate, enthaltend Wirkstoffe wie Paracetamol, Acetylsalicylsäure oder Ibuprofen, Vitamine (beispielsweise Vitamin H, Vitamine aus der B-Reihe wie Vitamin B1, B2, B6, B12, Niacin, Panthotensäure, vorzugsweise in Form von (Brause)Tabletten oder Kapseln), Mineralien (vorzugsweise in Form von (Brause)Tabletten oder Kapseln) wie Eisensalze, Zinksalze, Selensalze, Produkte enthaltend Wirkstoffe oder Extrakte von Spitzwegerich (beispielsweise in Hustensirup) oder Johanniskraut.

### KAPSELN

Die oralen Zubereitungen können auch in Emulsionen, in Liposomen, beispielsweise ausgehend von Phosphatidylcholin, in Microsphären, in Nanosphären und insbesondere auch in Kapseln, Granulaten oder Extrudaten aus einer für Lebens- und Genussmittel geeigneten Matrix, beispielsweise aus Stärke, Stärkederivaten, Cellulose oder Cellulosederivaten (beispielsweise Hydroxypropylcellulose) eingearbeitet werden.

In eine weiteren bevorzugten Ausführungsform werden die erfindungsgemäßen Aromamischungen mit einem oder mehreren geeigneten Komplexbildnern, beispielsweise mit Cycloglycanen, beispielsweise Cyclofructanen, Cyclodextrinen oder Cyclodextrinderivaten, bevorzugt α-, γ- und ▪-Cyclodextrin, komplexiert und in dieser komplexierten Form als konfektioniertes Endprodukt, d.h. als orale Zubereitung eingesetzt. Besonders bevorzugt ist eine erfindungsgemäßes oral konsumierbares süß schmeckendes Produkt, bei der die Matrix so gewählt wird, dass die erfindungsgemäße Aromamischung verzögert von der Matrix freigegeben wird, so dass man eine langanhaltende Wirkung erhält.

Neben üblichen Makrokapseln auf Basis von Gelatine kommen dabei vor allem auch so genannte Mikro- oder Nanokapseln in Betracht. Darunter werden vom Fachmann sphärische Aggregate mit einem Durchmesser im Bereich von etwa 0,0001 bis etwa 5 und vorzugsweise 0,005 bis 0,5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon. Beispiele für Mikrokapseln des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide). Besonders interessant für die Verkapselung von Zubereitungen für kosmetische Anwendungen sind Koazervate von kationischen Polymeren, insbesondere von Chitosan, mit anioniscchen polymeren, speziell Alginaten. Entsprechende Verfahren sind beispielsweise in den Druckschriften WO 2001 001926**,** WO 2001 001927**,** WO 2001001928 und WO 2001 001929 (Cognis) beschrieben.

Mikrokapseln enthalten die Wirkstoffe häufig in einer Gelphase gelöst oder dispergiert. Als Gelbildner werden vorzugsweise solche Stoffe in Betracht gezogen, welche die Eigenschaft zeigen in wässriger Lösung bei Temperaturen oberhalb von 40 °C Gele zu bilden. Typische Beispiele hierfür sind Heteropolysaccharide und Proteine. Als thermogelierende Heteropolysaccharide kommen vorzugsweise Agarosen in Frage, welche in Form des aus Rotalgen zu gewinnenden Agar-Agar auch zusammen mit bis zu 30 Gew.-% nichtgelbildenden Agaropektinen vorliegen können. Hauptbestandteil der Agarosen sind lineare Polysaccharide aus D-Galaktose und 3,6-Anhydro-L-galaktose, die alternierend β-1,3- und β-1,4-glykosidisch verknüpft sind. Die Heteropolysaccharide besitzen vorzugsweise ein Molekulargewicht im Bereich von 110.000 bis 160.000 und sind sowohl farb- als auch geschmacklos. Als Alternativen kommen Pektine, Xanthane (auch Xanthan Gum) sowie deren Mischungen in Frage. Es sind weiterhin solche Typen bevorzugt, die noch in 1-Gew.-%iger wässriger Lösung Gele bilden, die nicht unterhalb von 80 °C schmelzen und sich bereits oberhalb von 40 °C wieder verfestigen. Aus der Gruppe der thermogelierenden Proteine seien exemplarisch die verschiedenen Gelatine-Typen genannt.

Geeignete kationische Polymere sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von Diallylammoniumsalzen und Acrylamiden, quaternierte Vinylpyrrolidon/Vinylimidazol-Polymere, wie z.B. Luviquat® (BASF), Kondensationsprodukte von Polyglycolen und Aminen, quaternierte Kollagenpolypeptide, wie beispielsweise Lauryldimonium Hydroxypropyl Hydrolyzed Collagen (Lamequat®L/Grünau), quaternierte Weizenpolypeptide, Polyethylenimin, kationische Siliconpolymere, wie z.B. Amodimethicone, Copolymere der Adipinsäure und Dimethylaminohydroxypropyldiethylentriamin (Cartaretine®/Sandoz), Copolymere der Acrylsäure mit Dimethyldiallylammoniumchlorid (Merquat® 550/Chemviron), Polyaminopolyamide sowie deren vernetzte wasserlöslichen Polymere, kationische Chitinderivate wie beispielsweise quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar® CBS, Jaguar® C-17, Jaguar® C-16 der Firma Celanese, quaternierte Ammoniumsalz-Polymere, wie z.B. Mirapol® A-15, Mirapol® AD-1, Mirapol® AZ-1 der Firma Miranol. Vorzugsweise wird als Verkapselungsmaterial Chitosan eingesetzt. Chitosane stellen Biopolymere dar und werden zur Gruppe der Hydrokolloide gezählt. Chemisch betrachtet handelt es sich um partiell deacetylierte Chitine unterschiedlichen Molekulargewichtes, die den folgenden - idealisierten - Monomerbaustein enthalten:

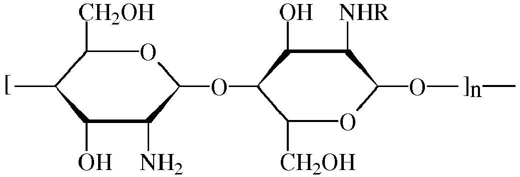

Im Gegensatz zu den meisten Hydrokolloiden, die im Bereich biologischer pH-Werte negativ geladen sind, stellen Chitosane unter diesen Bedingungen kationische Biopolymere dar. Die positiv geladenen Chitosane können mit entgegengesetzt geladenen Oberflächen in Wechselwirkung treten und werden daher in kosmetischen Haar- und Körperpflegemitteln sowie pharmazeutischen Zubereitungen eingesetzt. Zur Herstellung der Chitosane geht man von Chitin, vorzugsweise den Schalenresten von Krustentieren aus, die als billige Rohstoffe in großen Mengen zur Verfügung stehen. Das Chitin wird dabei in einem Verfahren, das erstmals von Hackmann et al. beschrieben worden ist, üblicherweise zunächst durch Zusatz von Basen deproteiniert, durch Zugabe von Mineralsäuren demineralisiert und schließlich durch Zugabe von starken Basen deacetyliert, wobei die Molekulargewichte über ein breites Spektrum verteilt sein können. Vorzugsweise werden solche Typen eingesetzt, wie die ein durchschnittliches Molekulargewicht von 10.000 bis 500.000 bzw. 800.000 bis 1.200.000 Dalton aufweisen und/oder eine Viskosität nach Brookfield (1 Gew.-%ig in Glycolsäure) unterhalb von 5000 mPas, einen Deacetylierungsgrad im Bereich von 80 bis 88% und einem Aschegehalt von weniger als 0,3 Gew.-% besitzen. Aus Gründen der besseren Wasserlöslichkeit werden die Chitosane in der Regel in Form ihrer Salze, vorzugsweise als Glycolate eingesetzt.

Die anionischen Polymere haben die Aufgabe, mit den kationischen Membranen zu bilden. Für diesen Zweck eignen sich vorzugsweise Salze der Alginsäure. Bei der Alginsäure handelt es sich um ein Gemisch carboxylgruppenhaltiger Polysaccharide mit folgendem idealisierten Monomerbaustein:

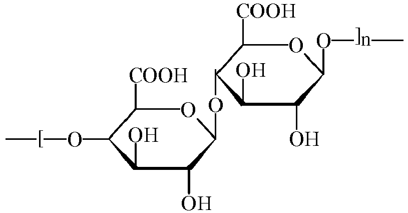

Das durchschnittliche Molekulargewicht der Alginsäuren bzw. der Alginate liegt im Bereich von 150.000 bis 250.000. Dabei sind als Salze der Alginsäure sowohl deren vollständige als auch deren partiellen Neutralisationsprodukte zu verstehen, insbesondere die Alkalisalze und hierunter vorzugsweise das Natriumalginat ("Algin") sowie die Ammonium- und Erdalkalisalze. besonders bevorzugt sind Mischalginate, wie z.B. Natrium/Magnesium- oder Natrium/Calciumalginate. In einer alternativen Ausführungsform der Erfindung kommen für diesen Zweck jedoch auch anionische Chitosanderivate, wie z.B. Carboxylierungs- und vor allem Succinylierungsprodukte in Frage. Alternativ kommen auch Poly(meth)acrylate mit durchschnittlichen Molekulargewichten im Bereich von 5.000 bis 50.000 Dalton sowie die verschiedenen Carboxymethylcellulosen in Frage. Anstelle der anionischen Polymeren können für die Ausbildung der Hüllmembran auch anionische Tenside oder niedermolekulare anorganische Salze, wie beispielsweise Pyrophosphate eingesetzt werden.

Zur Herstellung der Mikrokapseln stellt man üblicherweise eine 1 bis 10, vorzugsweise 2 bis 5 Gew.-%ige wässrige Lösung des Gelbildners, vorzugsweise des Agar-Agars her und erhitzt diese unter Rückfluss. In der Siedehitze, vorzugsweise bei 80 bis 100 °C, wird eine zweite wässrige Lösung zugegeben, welche das Kationpolymer, vorzugsweise das Chitosan in Mengen von 0,1 bis 2, vorzugsweise 0,25 bis 0,5 Gew.-% und den Wirkstoffen in Mengen von 0,1 bis 25 und insbesondere 0,25 bis 10 Gew.-% enthält; diese Mischung wird als Matrix bezeichnet. Die Beladung der Mikrokapseln mit Wirkstoffen kann daher ebenfalls 0,1 bis 25 Gew.-% bezogen auf das Kapselgewicht betragen. Falls gewünscht, können zu diesem Zeitpunkt zur Viskositätseinstellung auch wasserunlösliche Bestandteile, beispielsweise anorganische Pigmente zugegeben werden, wobei man diese in der Regel in Form von wässrigen oder wässrig/alkoholischen Dispersionen zusetzt. Zur Emulgierung bzw. Dispergierung der Wirkstoffe kann es ferner von Nutzen sein, der Matrix Emulgatoren und/oder Lösungsvermittler hinzuzugeben. Nach der Herstellung der Matrix aus Gelbildner, Kationpolymer und Wirkstoffen kann die Matrix optional in einer Ölphase unter starker Scherung sehr fein dispergiert werden, um bei der nachfolgenden Verkapselung möglichst kleine Teilchen herzustellen. Dabei hat es sich als besonders vorteilhaft erwiesen, die Matrix auf Temperaturen im Bereich von 40 bis 60 °C zu erwärmen, während man die Ölphase auf 10 bis 20 °C kühlt. Im letzten, nun wieder obligatorischen Schritt erfolgt dann die eigentliche Verkapselung, d.h. die Ausbildung der Hüllmembran durch Inkontaktbringen des Kationpolymers in der Matrix mit den anionischen Polymeren. Hierzu empfiehlt es sich, die gegebenenfalls in der Ölphase dispergierte Matrix bei einer Temperatur im Bereich von 40 bis 100, vorzugsweise 50 bis 60 °C mit einer wässrigen, etwa 1 bis 50 und vorzugsweise 10 bis 15 Gew.-%ige wässrigen Lösung des Anionpolymers zu behandeln und dabei - falls erforderlich - gleichzeitig oder nachträglich die Ölphase zu entfernen. Die dabei resultierenden wässrigen Zubereitungen weisen in der Regel einen Mikrokapselgehalt im Bereich von 1 bis 10 Gew.-% auf. In manchen Fällen kann es dabei von Vorteil sein, wenn die Lösung der Polymeren weitere Inhaltsstoffe, beispielsweise Emulgatoren oder Konservierungsmittel enthält. Nach Filtration werden Mikrokapseln erhalten, welche im Mittel einen Durchmesser im Bereich von vorzugsweise etwa 0,01 bis 1 mm aufweisen. Es empfiehlt sich, die Kapseln zu sieben, um eine möglichst gleichmäßige Größenverteilung sicherzustellen. Die so erhaltenen Mikrokapseln können im herstellungsbedingten Rahmen eine beliebige Form aufweisen, sie sind jedoch bevorzugt näherungsweise kugelförmig. Alternativ kann man die Anionpolymere auch zur Herstellung der Matrix einsetzen und die Verkapselung mit den Kationpolymeren, speziell den Chitosanen durchführen.

Alternativ kann die Verkapselung auch unter ausschließlicher Verwendung von Kationpolymeren erfolgen, wobei man sich deren Eigenschaft zu Nutze macht, bei pH-Werten oberhalb des pKs-Wertes zu koagulieren.

In einem zweiten alternativen Verfahren wird zur Herstellung der erfindungsgemäßen Mikrokapseln wird zunächst eine O/W-Emulsion zubereitet, welche neben dem Ölkörper, Wasser und den Wirkstoffen eine wirksame Menge Emulgator enthält. Zur Herstellung der Matrix wird diese Zubereitung unter starkem Rühren mit einer entsprechenden Menge einer wässrigen Anionpolymerlösung versetzt. Die Membranbildung erfolgt durch Zugabe der Chitosanlösung. Der gesamte Vorgang findet vorzugsweise im schwach sauren Bereich bei pH = 3 bis 4 statt. Falls erforderlich erfolgt die pH-Einstellung durch Zugabe von Mineralsäure. Nach der Membranbildung wird der pH-Wert auf 5 bis 6 angehoben, beispielsweise durch Zugabe von Triethanolamin oder einer anderen Base. Hierbei kommt es zu einem Anstieg der Viskosität, die durch Zugabe von weiteren Verdickungsmitteln, wie z.B. Polysacchariden, insbesondere Xanthan-Gum, Guar-Guar, Agar-Agar, Alginaten und Tylosen, Carboxymethylcellulose und Hydroxyethylcellulose, höhermolekularen Polyethylenglycolmono- und -diestern von Fettsäuren, Polyacrylaten, Polyacrylamiden und dergleichen noch unterstützt werden kann. Abschließend werden die Mikrokapseln von der wässrigen Phase beispielsweise durch Dekantieren, Filtrieren oder Zentrifugieren abgetrennt.

In einem dritten alternativen Verfahren erfolgt die Bildung der Mikrokapseln um einen vorzugsweise festen, beispielsweise kristallinen Kern, indem dieser schichtweise mit entgegengesetzt geladenen Polyelektrolyten eingehüllt wird. In diesem Zusammenhang sei auf das Europäische Patent EP 1064088 B1 (Max-Planck Gesellschaft) verwiesen.

### GEWERBLICHE ANWENDBARKEIT

Ein weiterer Gegenstand der Erfindung betrifft ein Verfahren zur Herstellung einer Zubereitung zur oralen Aufnahme oder einer Aromamischung umfassend die Schritte
(a) Bereitstellen einer Aromamischung wie oben erläutert oder der einzelnen Bestandteile einer solchen Aromamischung und
(b) Einarbeiten der bereitgestellten Aromamischung oder deren Bestandteile in ein oral konsumierbares Produkt, so dass das Verhältnis des Sucroseäquivalenz der Konzentration des Stoffes oder der Stoffe der Komponente (b) zur Sucroseäquivalenz der Konzentration des Stoffes oder der Stoffe der Komponente (a) im konfektionierten Endprodukt größer oder gleich zwei ist.

Die erfindungsgemäßen Produkte werden gemäß einer bevorzugten Ausgestaltung hergestellt, indem die Bestandteile der erfindungsgemäßen Aromamischung als Substanzen, als Lösung oder in Form eines Gemischs mit einem festen oder flüssigen Trägerstoff in eine der Ernährung, der Mundpflege oder dem Genuss dienende oder orale pharmazeutische Basis-Zubereitung eingearbeitet werden. Vorteilhafterweise können als Lösung vorliegende erfindungsgemäße Zubereitungen auch durch Sprühtrocknung in eine feste Zubereitung überführt werden.

Ebenfalls umfasst die Erfindung ein Verfahren zur Aromatisierung und/oder zum Süßen von Zubereitungen zur oralen Aufnahme, umfassend die folgenden Schritte:
(a) Bereitstellen der Zubereitung und
(b) Vermischen der Zubereitung mit einer Aromamischung wie oben ausgeführt.

Schließlich betrifft die Erfindung auch die Verwendung der Aromamischungen wie oben ausgeführt zur Aromatisierung oder zum Süßen von Zubereitungen zur oralen Aufnahme.

Wie bereits oben umfangreich beschrieben ist es durch diese Verwendung möglich, einen gegebenen Geschmackseindruck (Süße) zu erzeugen, bei gleichzeitig verringertem Einsatz von süß schmeckenden Substanzen, die die Komponente (b) bilden.

Schließlich ist Bestandteil der Offenbarung auch die Verwendung eines Extraktes aus *Abrus fruticulosus (sy. Abrus pulchellus) und*/ *oder Abrus precatorius* zum Erzeugen eines oral konsumierbaren Produktes mit einem stabilisierten Gehalt einer Verbindungen oder an Verbindungen, ausgewählt aus der Gruppe (a) bestehend aus einem oder mehreren Abrusosiden und dessen physiologisch verträglichen Salzen, wobei das Produkt einen oder mehrere süß schmeckende Stoffe, ausgewählt aus der Gruppe (b) der natürlich vorkommenden süß schmeckenden Stoffe und deren physiologisch verträglichen Salzen ohne Abrusoside und deren physiologisch verträglichen Salzen umfasst. Auf diese Art ist es möglich, Aromamischungen und oral konsumierbare Endprodukte bereitzustellen, in denen der Anteil an Phyllodulcin bzw. dessen Salzen stabilisiert ist, so dass der vorteilhafte Effekt dieser Verbindungen auch über einen verringerten Zeitraum genutzt werden kann.

Nachfolgend wird die Erfindung anhand von Beispielen und den Ansprüchen weiter erläutert. Die Beispiele dienen zur Verdeutlichung der Erfindung, ohne den Schutzbereich der Patentansprüche einzuschränken. Sofern nicht anders angegeben, beziehen sich alle Angaben auf das Gewicht.

### BEISPIELE

### Herstellbeispiel H1

### Herstellung eines ethanolischen/wässrigen Abrus fruticulosus-Trockenextrakts

50 g getrocknetes Pflanzenmaterial wurden in 300 ml Ethanol/Wasser (4:1 v/v) für eine Stunde unter Rühren extrahiert. Das Lösungsmittel wurde anschließend unter Vakuum entfernt. Die Ergebnisse sind in **Tabelle 1** zusammengefasst:

**Tabelle 1**

| Extraktion von *Abrus fruticulosus;* der Gehalt der Abrusoside bezieht sich auf die Trockenmasse | | |
|---|---|---|
| **Lösungsmittel** | **Ausbeute [g]** | **Gehalt Abrusoside [%]** |
| Ethanol/ Wasser (4:1 v/v) | 24 | 29 |

### Herstellbeispiel H2

### Herstellung eines angereicherten Abrus fruticulosus-Trockenextrakts durch Gegenextraktion mit Ethylacetat

50 g eines getrockneten, ethanolisch/wässrigen Extrakts wurden in 200 ml Ethanol/Wasser (4:1, v/v) gelöst und mit 180 ml Ethylacetat gegenextrahiert. Die Phasen wurden getrennt und das Lösungsmittel unter Vakuum entfernt. Die Ergebnisse sind in **Tabelle 2** zusammengefasst:

**Tabelle 2**

| Extraktion von *Abrus fruticulosus*; der Gehalt der Abrusoside bezieht sich auf die Trockenmasse | | |
|---|---|---|
| **Lösungsmittel** | **Ausbeute [g]** | **Gehalt Abrusoside [%]** |
| Ethanol/ Wasser (4:1 v/v) | 18 | 25 |

### Anwendungsbeispiel A1

### Zuckerreduziertes Erfrischungsgetränk

In der folgenden Tabelle 5 werden Formulierungen verschiedener Erfrischungsgetränke mit reduziertem Zuckergehalt wiedergegeben. Die Zutaten wurden in der angegebenen Reihenfolge gemischt und mit Wasser auf 100 % aufgefüllt. Die Mischungen wurden in Glasflaschen gefüllt und karbonisiert.

Dabei gilt:
Zubereitung V1 : Vergleichszubereitung mit 10 % Zucker
Zubereitung V2 : Vergleichszubereitung mit 8 % Zucker
Zubereitung V3 : Vergleichszubereitung mit 8 % Zucker und Neohesperidindihydrochalkon
Zubereitungen 1 bis 4: Nicht-erfindungsgemäße zuckerreduzierte Zubereitungen mit 8 % Zucker
Zubereitung 5: Erfindungsgemäße zuckerreduzierte Zubereitung mit 8 % Zucker

Die Formulierungen sind in **Tabelle 3** wiedergegeben.

**Tabelle 3**

| Formulierung Erfrischungsgetränke V1 bis V3 sowie 1 bis 5; alle Angaben als Gew.-% | | | | | | | | |
|---|---|---|---|---|---|---|---|---|
| **Komponente** | **V1** | **V2** | **V3** | **1** | **2** | **3** | **4** | **5** |
| Zucker | 10 | 8 | 8 | 8 | 8 | 8 | 8 | 8 |
| Zitronensäure | 0,15 | 0,15 | 0,15 | 0,15 | 0,15 | 0,15 | 0,15 | 0,15 |
| Zitronenaroma | 0,1 | 0,1 | 0,1 | 0,1 | 0,1 | 0,1 | 0,1 | 0,1 |
| Neohesperidin-dihydrochalcon | - | - | 0,0001 | - | - | - | - | - |
| Extrakt aus Beispiel 2, enthaltend x % Abrusoside | - | - | - | 0,011 | 0,005 | 0,005 | 0,005 | 0,005 |
| Phloretin | - | - | - | - | | - | 0,002 | - |
| Hesperetin | - | - | - | - | | - | - | 0,001 |
| Extrakt aus *Hydrangea macrophylla* enthaltend 5 Gew.-% Phyllodulcin bez. auf das Gesamtgewicht des Extraktes | - | - | - | - | - | - | - | - |
| Extrakt aus *Rubus suavissimus,* enthaltend 5 Gew.-% Rubusosid bez. auf das Gesamtgewicht des Extraktes | - | - | - | - | - | 0,010 | - | - |
| Wasser | Ad 100 | | | | | | | |

### Anwendungsbeispiel A2

### Aromamischungen, enthaltend Süßstoffe

Die Stoffe bzw. Lösungen werden in den oben angegebenen Mengenverhältnissen gemischt und werden so verwendet. Die typische Dosierung von Zubereitung 6 im Fertigprodukt liegt bei 7 bis 15 Gew.-% bezogen auf das Fertigprodukt, die typische Dosierung von Zubereitungen 7 bis 14 bei 0,01 bis 0,1 % bezogen auf das Fertigprodukt, bevorzugt bei 0,03 bis 0,06 %. Die Zusammensetzungen sind **Tabelle 4** zu entnehmen, Zusammensetzungen 6 und 9-14 sind erfindungsgemäß.

**Tabelle 4**

| Aromamischungen 6 bis 14; alle Angaben als Gew.-% | | | | | | | | | |
|---|---|---|---|---|---|---|---|---|---|
| **Komponenten** | **6** | **7** | **8** | **9** | **10** | **11** | **12** | **13** | **14** |
| "Flüssigzucker", enthält 80 % Sucrose | 99,87 | - | - | - | - | - | - | - | - |
| Rebaudiosid A 98 % | - | 80 | - | - | 70 | 70 | 60 | 70 | 73,5 |
| Rebaudiosid A 90 % | - | - | 90 | - | - | - | - | - | - |
| Steviosid 95 % | - | - | - | 75 | - | - | - | - | - |
| Extrakt aus *Abrus fruticulosus* nach Beispiel H2 (25 % Abrusoside) | 0,10 | 20 | - | 20 | 20 | 10 | 10 | 20 | 20 |
| Extrakt aus *Hydrangea dulcis* nach Beispiel A3 (Ethylacetat, 14,4 % Phyllodulcin) | - | - | 10 | - | - | - | - | - | - |
| Extrakt aus Rubus suavissimus, enthaltend 5 Gew.-% Rubusosid, z.B. von PlantExtrakt | - | - | - | - | - | - | 25 | - | - |
| Phloretin | 0,02 | - | - | 4 | 5 | 3,2 | 3,5 | 5 | 5 |
| Hesperetin | 0,01 | - | - | 1 | 5 | 0,8 | 1 | 4,9 | 1 |
| Neohesperidindihydrochalkon | - | - | - | - | - | - | 0,5 | - | - |
| Homoeriodictyol-Na-Salz | - | - | - | - | - | 16 | - | - | - |
| Vanillin, natürlich | - | - | - | - | - | - | - | 0,1 | - |
| Zuckerdestillat aus Rohrzucker (z.B. Treatt) | - | - | - | - | - | - | - | - | 0,5 |

### Anwendungsbeispiel A3

### Sprühgetrocknete Zubereitung als Halbfertigware zur Aromatisierung von Fertigwaren

Das Trinkwasser wird in einem Behälter vorgelegt und das Maltodextrin und das Gummi Arabicum darin gelöst. Anschließend werden die Aromamischungen mit einem Ultra-Turrax in die Trägerstofflösung emulgiert. Die Temperatur der Sprühlösung sollte 30°C nicht überschreiten. Das Gemisch wird dann sprühgetrocknet (Solltemperatur Eingang: 185 - 195°C, Solltemperatur Ausgang: 70 - 75°C). Die Zusammensetzungen sind in **Tabelle** 5 wiedergegeben, Zusammensetzungen 15 und 18-23 sind erfindungsgemäß.

**Tabelle 5**

| Sprühgetrocknete Aromazubereitungen 15 bis 23; alle Angaben als Gew.-% | | | | | | | | | |
|---|---|---|---|---|---|---|---|---|---|
| **Zubereitung** | **15** | **16** | **17** | **18** | **19** | **20** | **21** | **22** | **23** |
| Trinkwasser | 60 | 60 | 60 | 60 | 60 | 60 | 60 | 60 | 60 |
| Maltodextrin aus Weizen | 10 | 25 | 25 | 25 | 25 | 25 | 25 | 25 | 25 |
| Gummi Arabicum | 5 | 5 | 5 | 5 | 5 | 10 | 10 | 10 | 10 |
| Aromamischung 6 aus Beispiel A3 | 25 | - | - | - | - | - | - | - | - |
| Aromamischung 7 aus Beispiel A3 | - | 10 | - | - | - | - | - | - | - |
| Aromamischung 8 aus Beispiel A3 | - | - | 10 | - | - | - | - | - | - |
| Aromamischung 9 aus Beispiel A3 | - | - | - | 10 | - | - | - | - | - |
| Aromamischung 10 aus Beispiel A3 | - | - | - | - | 10 | - | - | - | - |
| Aromamischung 11 aus Beispiel A3 | - | - | - | - | - | 5 | - | - | - |
| Aromamischung 12 aus Beispiel A3 | - | - | - | - | - | - | 5 | - | - |
| Aromamischung 13 aus Beispiel A3 | - | - | - | - | - | - | - | 5 | - |
| Aromamischung 14 aus Beispiel A3 | - | - | - | - | - | - | - | - | 5 |

### Anwendungsbeispiel A4

### Lösungen der Aromamischungen

Die Kompositionen aus Anwendungsbeispiel A3 können auch mit Wasser, Propylenglycol, Glycerin, oder Ethanol oder bevorzugt mit Gemischen der vorgenannten Lösungsmittel (z.B. Wasser-Propylenglycol, Wasser-Glycerin, Wasser-Ethanol, Glycerin-Ethanol, Glycerin-Propylenglycol, Propylenglycol-Ethanol) beispielsweise als 1 bis 20 Gew.-%ige Lösung, bevorzugt 2 - 10 Gew.-%ige, besonders bevorzugt 5 Gew.-%ige Lösung aufgenommen und durch leichtes Erwärmen vollständig gelöst werden.

### Anwendungsbeispiel A5

### Softdrink Typ "Cola", Rezepturen 24 bis 31

Die Zutaten wurden in der angegebenen Reihenfolge gemischt, in Flaschen gefüllt und karbonisiert. Die Zusammensetzungen sind **Tabelle 6** zu entnehmen, Zusammensetzungen 24 und 27-31 sind erfindungsgemäß.

**Tabelle 6**

| Zusammensetzungen Softdrinks 24 bis 31; alle Angaben als Gew.-% | | | | | | | | |
|---|---|---|---|---|---|---|---|---|
| **Komponenten** | **24** | **25** | **26** | **27** | **28** | **29** | **30** | **31** |
| Saccharose | 0 | 8 | 7 | 7 | 7 | - | 7 | - |
| Glucose/Fructose-Sirup aus Mais, enthaltend 55 Gew.-% Fructose | - | - | - | - | - | 8 | - | 7 |
| Aromamischung 6 aus Beispiel A3 | 10 | - | - | - | - | - | - | - |
| Aromamischung 7 aus Beispiel A3 | - | 0,05 | - | - | - | - | - | - |
| Aromamischung 8 aus Beispiel A3 | - | - | 0,05 | - | - | - | - | - |
| Aromamischung 9 aus Beispiel A3 | - | - | - | 0,05 | - | - | - | - |
| Aromamischung 10 aus Beispiel A3 | - | - | - | - | 0,05 | - | - | - |
| Aromamischung 11 aus Beispiel A3 | - | - | - | - | - | 0,05 | - | - |
| Aromamischung 12 aus Beispiel A3 | - | - | - | - | - | - | 0,05 | - |
| Aromamischung 13 aus Beispiel A3 | - | - | - | - | - | - | - | 0,05 |
| Phosphorsäure | 0,07 | 0,07 | 0,07 | 0,07 | 0,07 | 0,07 | 0,07 | 0,07 |
| Citronensäure | 0,06 | 0,06 | 0,06 | 0,06 | 0,06 | 0,06 | 0,06 | 0,06 |
| Zuckercouleur | 0,14 | 0,14 | 0,14 | 0,14 | 0,14 | 0,14 | 0,14 | 0,14 |
| Coffein | 0,01 | 0,01 | 0,01 | 0,01 | 0,01 | 0,01 | 0,01 | 0,01 |
| Getränke-Emulsion Typ "Cola" | 0,05 | 0,05 | 0,05 | 0,05 | 0,05 | 0,05 | 0,05 | 0,05 |
| Wasser | auf 100% auffüllen | | | | | | | |

### Anwendungsbeispiel A6

### Eisteegetränke, Rezepturen 32 bis 39

Die Zutaten wurden in der angegebenen Reihenfolge gemischt, in Flaschen gefüllt und sterilisiert. Die Zusammensetzungen sind **Tabelle 7** zu entnehmen, alle Zusammensetzungen sind erfindungsgemäß.

**Tabelle 7**

| Zusammensetzung Eistees; alle Angaben als Gew.-% | | | | | | | | |
|---|---|---|---|---|---|---|---|---|
| **Komponenten** | **32** | **33** | **34** | **35** | **36** | **37** | **38** | **39** |
| Aromamischung 6 aus Beispiel A3 | 6 | - | - | - | - | - | - | - |
| Aromamischung 12 aus Beispiel A3 | - | - | - | 0,03 | - | - | 0,03 | 0,03 |
| Aromamischung 13 aus Beispiel A3 | - | 0,03 | - | - | 0,03 | - | - | - |
| Aromamischung 14 aus Beispiel A3 | - | - | 0,03 | - | - | 0,03 | - | - |
| Zitronensäure | 0,15 | 0,12 | 0,15 | 0,12 | 0,15 | 0,12 | 0,15 | 0,12 |
| Ascorbinsäure | 0,02 | 0,02 | 0,02 | 0,02 | 0,02 | 0,02 | 0,02 | 0,02 |
| Schwarzteeextrakt | 0,15 | 0,15 | - | - | 0,15 | 0,15 | - | - |
| Grünteeextrakt (mind. 50 % Polyphenole) | - | - | 0,1 | 0,1 | - | - | 0,33 | 0,33 |
| natürliches Aroma Typ "Zitrone" | 0,1 | - | 0,1 | - | 0,1 | - | 0,1 | - |
| natürliches Aroma Typ "Pfirsich" | - | 0,07 | - | 0,07 | - | 0,07 | - | 0,07 |
| Wasser | auf 100% auffüllen | | | | | | | |

**Anwendungsbeispiel A7**

### Kaugummizusammensetzung, Rezeptur 40

Die Phasen A bis D wurden gemischt und intensiv geknetet. Die Rohmasse kann z.B. in Form von dünnen Streifen zu verzehrfertigen Kaugummis verarbeitet werden. Die Zusammensetzung ist **Tabelle 8** zu entnehmen.

**Tabelle 8**

| Kaugummizusammensetzung 40; alle Angaben als Gew.-% | | |
|---|---|---|
| **Phase** | **Inhaltsstoff** | **Einsatzmenge** |
| A | Kaugummibase, Company "Jagum T" | 30,00 |
| B | Sorbit, pulverisiert | 38,975 |
| | Isomalt® (Palatinit GmbH) | 9,50 |
| | Xylit | 2,00 |
| | Mannit | 3,00 |
| | Rebaudiosid A 98 % | 0,20 |
| | Extrakt aus Beispiel H2 | 0,02 |
| | Hesperetin | 0,005 |
| | Emulgum® (Colloides Naturels, Inc.) | 0,30 |
| C | Sorbitol, 70% | 14,00 |
| | Glycerin | 1,00 |
| D | Mint-Aroma | 1 |

### Anwendungsbeispiel A8

### Zuckerfreie Hartkaramellen, Rezepturen 41 bis 44

Palatinit wurde gegebenenfalls nach Zugabe der Zitronensäure mit Wasser gemischt und die Mischung bei 165 °C aufgeschmolzen und anschließend auf 115 °C abgekühlt. Das Aroma und die anderen Bestandteile wurden zugegeben und nach dem Durchmischen in Formen gegossen, nach dem Erstarren aus den Formen entfernt und anschließend einzeln verpackt. Die Zusammensetzungen sind **Tabelle 9** zu entnehmen, Zusammensetzungen 42 und 44 sind erfindungsgemäß.

**Tabelle 9**

| Hartkaramellzusammensetzungen 41 bis 44; alle Angaben als Gew.-% | | | | |
|---|---|---|---|---|
| **Komponente** | **41** | **42** | **43** | **44** |
| Palatinit, Typ M | 75,00 | 74,00 | 75,50 | 75,00 |
| Zitronensäure | - | 1,0 | 0,5 | - |
| Wasser | 24,88 | 24,842 | 23,88 | 24,844 |
| Farbstoff gelb | - | 0,01 | - | - |
| Farbstoff rot | - | - | 0,01 | - |
| Farbstoff blau | 0,01 | - | - | 0,01 |
| Pfefferminzaroma | 0,1 | - | - | 0,1 |
| Zitronenaroma | - | 0,1 | - | - |
| Rotfruchtaroma | - | - | 0,1 | - |
| Rebaudiosid A 98 % | - | 0,040 | - | 0,040 |
| Extrakt aus Beispiel H2 | 0,010 | 0,005 | 0,010 | 0,005 |
| Hesperetin | - | 0,001 | - | 0,001 |
| Phloretin | - | 0,002 | - | - |

### Anwendungsbeispiel A9

### Zuckerreduzierter Kochpudding, Rezepturen V4, V5 sowie 45 bis 48

Die festen Stoffe wurden vorgelegt und mit der Milch aufgerührt. Die Mischung wurde auf 95 °C für 2 min unter gutem Rühren aufgewärmt, abgefüllt und auf 5 - 8 °C abgekühlt. Die Zubereitungen 4 und V5 Vergleichszubereitungen mit vollem (V4) bzw. reduziertem (V5) Zuckergehalt dar. Die Zusammensetzungen sind **Tabelle 10** zu entnehmen, Zusammensetzungen 45-48 sind erfindungsgemäß.

**Tabelle 10**

| Kochpuddingzusammensetzungen V4, V5 sowie 45 bis 48; alle Angaben als Gew.-% | | | | | | |
|---|---|---|---|---|---|---|
| **Komponente** | **V4** | **V4** | **45** | **46** | **47** | **48** |
| Sucrose | 7,8 | 5,4 | 5,4 | 5,4 | 5,4 | 5,4 |
| Stärke | 3,0 | 3,0 | 3,0 | 3,0 | 3,0 | 3,0 |
| Magermilch-pulver | 1,5 | 1,5 | 1,5 | 1,5 | 1,5 | 1,5 |
| Aubygel MR50 | 0,5 | 0,5 | 0,5 | 0,5 | 0,5 | 0,5 |
| Vanilleschoten-Extrakt, sprühgetrocknet, Symrise | 0,1 | 0,1 | 0,1 | 0,1 | 0,1 | 0,1 |
| Extrakt aus Beispiel H2 | - | - | 0,01 | 0,005 | 0,005 | 0,005 |
| Extrakt aus Rubus suavissimus, enthaltend 5 Gew.-% Rubusosid, z.B. von PlantExtrakt | - | - | - | - | 0,010 | 0,005 |
| Hesperetin | - | - | - | 0,001 | - | 0,001 |
| Phloretin | - | - | - | 0,002 | - | 0,002 |
| Milch 1,5 % Fettanteil | auffüllen auf 100 % | | | | | |

### Anwendungsbeispiel A10

### Fettarme Joghurts, Rezepturen V6 sowie 49 bis 51

Die Inhaltsstoffe wurden gemischt und bei 5°C gekühlt. Die Vergleichszubereitung V6 enthielt Zucker, die erfindungsgemäßen Zubereitungen 49 bis 51 wurden mit Süßstoffmischung und dem Extrakt aus Beispiel H2 hergestellt. Die Zusammensetzungen sind **Tabelle 11** zu entnehmen, Zusammensetzungen 49-51 sind erfindungsgemäß.

**Tabelle 11**

| Joghurtzusammensetzungen V6 sowie 49 bis 51; alle Angaben als Gew.-% | | | | |
|---|---|---|---|---|
| **Komponente** | **V6** | **49** | **50** | **51** |
| Sucrose | 10 | 8 | 6 | - |
| Rebaudiosid A 98 % | - | - | - | 0,050 |
| Extrakt aus Beispiel H2 | - | 0,010 | 0,005 | 0,010 |
| Extrakt aus *Rubus suavissimus,* enthaltend 5 Gew.-% Rubusosid, z.B. von PlantExtrakt | - | - | 0,010 | - |
| Hesperetin | - | 0,001 | 0,001 | 0,001 |
| Phloretin | - | - | 0,002 | - |
| Hopmoeriodictyol-Natriumsalz | - | - | - | 0,005 |
| Joghurt, 0,1 % Fett | zu 100 % auffüllen | | | |

### Anwendungsbeispiel A11

### Milchmischgetränke, Rezepturen V7 sowie 52 bis 54

Die Inhaltsstoffe wurden gemischt, mit Milch aufgefüllt, gut gerührt, in Flaschen abgefüllt und bei 5°C gekühlt gelagert. Die Vergleichszubereitung V7 enthielt Zucker, die erfindungsgemäßen Zubereitungen 52 bis 54 wurden mit dem Extrakt aus Beispiel H2 hergestellt. Die Zusammensetzungen sind **Tabelle 12** zu entnehmen.

**Tabelle 12**

| Milchgetränkezusammensetzungen V7 sowie 52 bis 54; alle Angaben als Gew.-% | | | | |
|---|---|---|---|---|
| **Komponente** | **V7** | **52** | **53** | **54** |
| Sucrose | 10 | 8 | 7 | - |
| Fructose | - | - | 0,5 | - |
| Rebaudiosid A 98 % | - | - | - | 0,040 |
| Extrakt aus Beispiel 2 | - | 0,010 | 0,005 | 0,010 |
| Extrakt aus *Rubus suavissimus,* enthaltend 5 Gew.-% Rubusosid, z.B. von PlantExtrakt | - | - | 0,010 | - |
| Hesperetin | - | 0,003 | 0,002 | 0,005 |
| Phloretin | - | - | 0,002 | - |
| Hopmoeriodictyol-Natriumsalz | - | - | - | 0,002 |
| H-Milch, 1,5 % Fett | zu 100 % auffüllen | | | |

### Anwendungsbeispiel A12

### Zuckerreduziertes Tomatenketchup, Rezepturen V8 und V9 sowie 55 bis 60

Die Inhaltsstoffe werden in der angegebenen Reihenfolge gemischt und das fertige Ketchup mit Hilfe eines Rührwerkes homogenisiert, in Flaschen abgefüllt und sterilisiert. Die beiden Vergleichsrezepturen V8 und V9 enthalten Zucker bzw. weisen einen reduzierten Zuckeranteil auf. Die Zusammensetzungen sind **Tabelle 13** zu entnehmen, Zusammensetzungen 57 und 59 sind erfindungsgemäß.

**Tabelle 13**

| Ketchupzusammensetzungen V8 und V9 sowie 55 bis 60; alle Angaben als Gew.-% | | | | | | | | |
|---|---|---|---|---|---|---|---|---|
| **Komponente** | **V8** | **V9** | **55** | **56** | **57** | **58** | **59** | **60** |
| Kochsalz | 2 | 2 | 2 | 2 | 2 | 2 | 2 | 2 |
| Stärke, Farinex WM 55 | 1 | 1 | 1 | 1 | 1 | 1 | 1 | 1 |
| Sucrose | 12 | 9,6 | 9,2 | 8,4 | 9,6 | 9,6 | 8,4 | 4,2 |
| Tomaten-Konzentrat 2-fach | 40 | 40 | 40 | 40 | 30 | 30 | 30 | 30 |
| Glucosesirup 80 Brix | 18 | 18 | 18 | 18 | 18 | 18 | 18 | 18 |

**Tabelle 13**

| Ketchupzusammensetzungen V8 und V9 sowie 55 bis 60; alle Angaben als Gew.-% (Forts.) | | | | | | | | |
|---|---|---|---|---|---|---|---|---|
| **Komponente** | **V8** | **V9** | **55** | **56** | **57** | **58** | **59** | **60** |
| Branntweinessig 10% | 7 | 7 | 7 | 7 | 3 | 3 | 3 | 3 |
| Rebaudiosid A 98 % | - | - | - | - | - | - | - | 0,05 |
| Extrakt aus Beispiel 2 | - | - | 0,01 | 0,005 | 0,005 | 0,01 | 0,005 | 0,01 |
| Extrakt aus *Rubus suavissimus,* enthaltend 5 Gew.-% Rubusosid, z.B. von PlantExtrakt | - | - | - | - | - | - | 0,01 | - |
| Hesperetin 2,5%ig in 1,2-Propylenglycol | - | - | - | - | 0,1 | - | 0,1 | - |
| Phloretin 2,5% in 1,2-Propylenglycol | - | - | - | 0,2 | 0,2 | - | - | 0,3 |
| Wasser zu 100 % auffüllen | | | | | | | | |

### Anwendungsbeispiel A14

### Zuckerreduzierte Eiscremes

Das Pflanzenfett wurde auf 58°C erwärmt. Magermilch und Glucosesirup wurden auf 55 °C erhitzt und Zucker, Magermilchpulver sowie Emulgator und Aroma hinzugefügt und die Mischung ins Pflanzenfett gegeben. Die Mischung wurde mit Hilfe eines Durchflusshochdruckhomogenisators homogenisiert (180 / 50 bar). Die erhaltene Masse wurde 1 min lang bei 78 °C temperiert, anschließend auf 2 bis 4 °C abgekühlt und 10 h zur Reifung bei dieser Temperatur inkubiert. Danach wurde die gereifte Masse abgefüllt und bei -18 °C eingefroren gelagert. Die beiden Vergleichsrezepturen V10 und V11 enthalten Zucker bzw. weisen einen reduzierten Zuckeranteil auf. Die Zusammensetzungen sind **Tabelle 14** zu entnehmen, Zusammensetzungen 62 und 64 sind erfindungsgemäß.

**Tabelle 14**

| Eiscremezusammensetzungen V10 und V11 sowie 61 bis 64; alle Angaben als Gew.-% | | | | | | |
|---|---|---|---|---|---|---|
| **Komponente** | **V10** | **V11** | **61** | **62** | **63** | **64** |
| Pflanzenfett, Schmelzbereich 35 - 40 °C | 20,00 | 20,00 | 20,00 | 20,00 | 20,00 | 20,00 |
| Zucker (Saccharose) | 12,00 | 8,00 | 8,00 | 8,00 | 8,00 | 8,00 |
| Magermilchpulver | 5,00 | 5,00 | 5,00 | 5,00 | 5,00 | 5,00 |
| Glucosesirup 72 % Trockensubstanz | 5,00 | 5,00 | 5,00 | 5,00 | 5,00 | 5,00 |
| Emulgator SE 30 (Grindstedt Products, Dänemark) | 0,65 | 0,65 | 0,65 | 0,65 | 0,65 | 0,65 |

**Tabelle 14**

| Eiscremezusammensetzungen V10 und V11 sowie 61 bis 64; alle Angaben als Gew.-% (Forts.) | | | | | | |
|---|---|---|---|---|---|---|
| **Komponente** | **V10** | **V11** | **61** | **62** | **63** | **64** |
| Aroma, enthaltend 0,1 % Diacetyl und 1 % Vanillin | 0,20 | 0,20 | 0,20 | 0,20 | 0,20 | 0,20 |
| Extrakt aus Beispiel H2 | - | - | 0,01 | 0,005 | 0,01 | 0,005 |
| Extrakt aus *Rubus suavissimus,* enthaltend 5 Gew.-% Rubusosid, z.B. von PlantExtrakt | - | - | - | - | - | 0,010 |
| Hesperetin 2,5%ig in 1,2-Propylenglycol | - | - | - | 0,10 | - | 0,10 |
| Phloretin 2,5% in 1,2-Propylenglycol | - | - | - | - | 0,05 | 0,05 |
| Magermilch | zu 100 % auffüllen | | | | | |

### Anwendungsbeispiel A14 (nicht-erfindungsgemäß) Für Diabetiker geeignetes Eis, Rezeptur 65

Es wurde ein für Diabetiker geeignetes Eis aus folgenden Zutaten hergestellt und in Portionen zu je 95 mL in Becher abgefüllt: Eingedickte entrahmte Milch, Fructosesirup, Erdbeerstücke und Erbeerpüree (15%), Pflanzenfett, Diätschokoladensplitter (3,5%, mit Emulgator Sojalecithin), Molkenerzeugnis, Rote Bete Saft, Johannisbrotkernmehl, Guarkernmehl, Carrageen, Emulgator (E 471), Gelatine, Säuerungsmittel Citronensäure, 0,1 % Erdbeer-Aroma (enthaltend 1 Gew.-% des Extrakts aus Beispiel 2 und und 1 Gew.-% Phloretin) bezogen auf das Gesamtgewicht des Erdbeer-Aromas), Farbstoff Carotin. Folgender Nährwert wurde ermittelt (pro 95 mL): Eiweiß 1,8 g, Kohlenhydrate 13,3 g (davon Fructose 9,5 g), Fett 4,2 g.

### Anwendungsbeispiel A15

### Diätschokolade auf Basis von Maltit, Rezeptur 66

Es wurde eine für Diabetiker geeignete Schokolade aus folgenden Zutaten hergestellt und in rechteckige Tafeln gegossen: Maltit, Haselnussmasse, Kakaobutter, Magermilchpulver, Kakaomasse, Inulin, Butterreinfett, Emulgator Sojalecithine, 0,1 % Vanille-Aroma (enthaltend Vanilleschoten-Extrakt, Vanillin und 1 Gew.-% Extrakt aus Beispiel 2 und 0,3 Gew.-% Hesperetin, bezogen auf das Gesamtgewicht des Vanille-Aromas). Folgender Nährwert wurde ermittelt (pro 100 g): Eiweiß 8 g, Kohlenhydrate 43 g (davon Maltit 34 g), Fett 34 g.

### Anwendungsbeispiel A16

### Diätschokolade auf Basis von Fructose, Rezeptur 67

Es wurde eine für Diabetiker geeignete Schokolade aus folgenden Zutaten hergestellt und in rechteckige Tafeln gegossen: Kakaomasse, Fructose, Magermilchpulver, Kakaobutter, Inulin, Butterreinfett, Emulgator Sojalecithin, Walnüsse, Speisesalz, 0,1 % Vanille-Aroma (enthaltend Vanillin und 1 Gew.-% Extrakt aus Beispiel 2 und 0,2 Gew.-% Hesperetin und 1 Gew.-% Homoeriodictyol-Natriumsalz, bezogen auf das Gesamtgewicht des Vanille-Aromas). Folgender Nährwert wurde ermittelt (pro 100 g): Eiweiß 8,8 g, Kohlenhydrate 34 g (davon Fructose 23 g, Lactose 7,5 g, Saccharose 1,4 g), Fett 36 g; Ballaststoffe 18,5 (davon 12,2 g Inulin); Natrium: 0,10 g. Kakao-Anteil mindestens 50 Gew.-%.

### Anwendungsbeispiel A17

### Zuckerreduzierte Müslimischung, Rezepturen V12 und 68

Es wurden jeweils die Bestandteile Nr. 1 bis 6 in einer Drehtrommel gemischt (entsprechend Mischung 1). Anschließend wurden die Bestandteile Nr. 7 bis 9 erwärmt und der Bestandteil Nr. 10 zugegeben (sowie in Rezeptur B zusätzlich de Bestandteil Nr. 11) (entsprechend Mischung 2). Danach wurde Mischung 2 zu Mischung 1 gegeben und gut durchmischt. Danach wurde die resultierende Müslimischung auf ein Backblech gegeben und in einem Ofen bei 130°C für 8 Minuten getrocknet. Die Rezeptur V12 dient zum Vergleich, Rezeptur 68 ist erfindungsgemäß. Die Zusammensetzungen sind **Tabelle 15** zu entnehmen.

**Tabelle 15**

| Müslizusammensetzungen V12 und 68; alle Angaben als Gew.-% | | |
|---|---|---|
| **Komponente** | **V12** | **68** |
| Haferflocken | 17,00 | 18,90 |
| Knusprige Haferflocken Cluster | 10,00 | 12,00 |
| Reis Crispies | 16,90 | 17,80 |
| Cornflakes | 16,50 | 17,50 |
| Korinthen | 3,50 | 3,50 |
| Haselnüsse, zerhackt | 2,50 | 2,50 |
| Glucose Sirup aus Weizen, DE 30 | 9,50 | 9,50 |
| Saccharose | 20,00 | 14,00 |
| Wasser | 4,00 | 4,00 |
| Zitronensäurepulver, wasserfrei | 0,10 | 0,10 |
| Aroma, enthaltend 1 Gew.-% Extrakt aus Beispiel H2 und 0,1 Gew.-% Hesperetin bezogen auf das Aroma | - | 0,20 |

### Anwendungsbeispiel A18 (nicht-erfindungsgemäß) Zuckerreduzierte Fruchtgummis, Rezepturen V13 und 69

Polydextrose ist ein selbst nicht süß schmeckendes Polysaccharid mit niedrigem Brennwert. Die Zusammensetzungen sind **Tabelle 16** zu entnehmen.

**Tabelle 16**

| Fruchtgummizusammensetzungen V13 und 69; alle Angaben als Gew.-% | | |
|---|---|---|
| **Komponente** | **V13** | **69** |
| Wasser | 23,70 | 25,70 |
| Saccharose | 34,50 | 8,20 |
| Glucosesirup, DE 40 | 31,89 | 30,09 |
| Iso Syrup C* Tru Sweet 01750 (Cerestar GmbH) | 1,50 | 2,10 |
| Gelatine 240 Bloom | 8,20 | 9,40 |
| Polydextrose (Litesse® Ultra, Danisco Cultor GmbH) | - | 24,40 |
| Gelber und roter Farbstoff | 0,01 | 0,01 |
| Citronensäure | 0,20 | |
| Kirscharoma, enthaltend 1 Gew.-% Extrakt aus Beispiel H2 und 0,3 Gew.-% Phloretin bezogen auf das Aroma | - | 0,10 |

### Anwendungsbeispiel A19 (nicht-erfindungsgemäß) Schoko-Cappuccino-Eiscreme, Rezepturen V14 und 70

Die Rezeptur V14 dient zum Vergleich, Die Zusammensetzungen sind **Tabelle 17** zu entnehmen.

**Tabelle 17**

| Eiscremezusammensetzungen V13 und 70; alle Angaben als Gew.-% | | |
|---|---|---|
| **Komponente** | **V13** | **70** |
| Glucose-Fructose-Sirup | 14,10 | 14,10 |
| Saccharose | 10,00 | 7,50 |
| Magermilchpulver | 5,00 | 5,00 |
| Sahne (36% Fettanteil) | 24,00 | 24,00 |
| Emulgator und Stabilisator Cremodan® 709VEG (Danisco) | 0,50 | 0,50 |

**Tabelle 19**

| Eiscremezusammensetzungen V13 und 70; alle Angaben als Gew.-% (Forts.) | | |
|---|---|---|
| **Komponente** | **V13** | **70** |
| Kakaopulver | 5,975 | 5,975 |
| Carrageenan | 0,025 | 0,025 |
| Wasser | 40,20 | 42,50 |
| Cappuccino-Aroma | 0,20 | 0,20 |
| Aromamischung enthaltend 1 Gew.-% Extrakt aus Beispiel H2 und 1 Gew.-% Homoeriodictyol-Natriumsalz bezogen auf das Aroma | - | 0,20 |

### Anwendungsbeispiel A20 (nicht-erfindungsgemäß) Gelatinekapseln zum Direktverzehr, Rezepturen 71 bis 73

Die zum Direktverzehr geeigneten Gelatinekapseln wurden gemäß WO 2004/050069 hergestellt und hatten einen Durchmesser von 5 mm, das Gewichtsverhältnis von Kernmaterial zu Hüllmaterial lag bei 90 : 10. Die Kapseln öffneten sich im Mund innerhalb von weniger als 10 Sekunden und lösten sich vollständig innerhalb von weniger als 50 Sekunden auf. Die Zusammensetzungen sind **Tabelle 18** zu entnehmen.

**Tabelle 18**

| Kapselzusammensetzungen 71 bis 73; alle Angaben als Gew.-% | | | |
|---|---|---|---|
| **Komponente** | **71** | **72** | **73** |
| **Gelatinehülle:** | | | |
| Glycerin | 2,014 | 2,014 | 2,014 |
| Gelatine 240 Bloom | 7,91 | 7,91 | 7,91 |
| Sucralose | 0,065 | 0,065 | 0,065 |
| Allura Rot | 0,006 | 0,006 | 0,006 |
| Brillantblau | 0,005 | 0,005 | 0,005 |

| **Kernzusammensetzung:** | | | |
|---|---|---|---|
| Pflanzenöl-Triglycerid (Kokosöl - Fraktion) | 79,55 | 68,70 | 58,95 |
| Orangen-Aroma, enthaltend 1 Gew.-% Extrakt aus Beispiel H2 und 1 Gew.-% Homoeriodictyol-Natriumsalz bezogen auf das Aroma | 10,0 | 20,0 | 28,65 |
| Rebaudiosid A 98 % | 0,05 | 0,05 | - |
| 2-Hydroxypropylmenthylcarbonat | 0,33 | 0,20 | - |

**Tabelle 18**

| Kapselzusammensetzungen 71 bis 73; alle Angaben als Gew.-% | | | |
|---|---|---|---|
| **Komponente** | **71** | **72** | **73** |
| 2-Hydroxyethylmenthylcarbonat | - | 0,20 | 1,00 |
| (1R,3R,4S) Menthyl-3-carbonsäure-N-ethylamid (WS-3) | - | 0,55 | 0,50 |
| (-)-Menthonglycerinacetal (Frescolat MGA) | - | 0,30 | 0,80 |
| Vanillin | 0,07 | - | 0,10 |

## Patentansprüche

1. Aromamischungen, enthaltend
(a) mindestens ein Abrusosid oder einen Abrusosidreichen Pflanzenextrakt und
(b) mindestens einen weiteren natürlichen Süßstoff, ausgewählt aus der Gruppe, die gebildet wird von Sucrose, Trehalose, Lactose, Maltose, Melizitose, Melibiose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd, Maltodextrin, Glycerin, Erythritol, Threitol, Arabitol, Ribitol, Xylitol, Sorbitol, Mannitol, Maltitol, Isomaltit, Dulcitol, Lactitol, Miraculin, Curculin, Monellin, Mabinlin, Thaumatin, Curculin, Brazzein, Pentadin, D-Phenylalanin, D-Tryptophan, z.B. Steviosid, Steviolbiosid, Rebaudiosid A, Rebaudiosid B, Rebaudiosid C, Rebaudiosid D, Rebaudiosid E, Rebaudiosid F, Rebaudiosid G, Rebaudiosid H, Dulcosid, Rubusosid, Oslandin, Polypodosid A, Strogin 1, Strogin 2, Strogin 4, Selligueanin A, Dihydroquercetin-3-acetat, Perillartin, Telosmosid A₁₅, Periandrin I-V, Phyllodulcin, Pterocaryosiden, Cyclocaryosiden, Mukuroziosiden, trans-Anethol, trans-Cinnamaldehyd, Bryosiden, Bryonosiden, Bryonodulcosiden, Carnosiflosiden, Scandenosiden, Gypenosiden, Trilobatin, Phloridzin, Dihydroflavanolen, Hematoxylin, Cyanin, Chlorogensäure, Albiziasaponin, Telosmosiden, Gaudichaudiosid, Mogrosiden, Hernandulcin, Glycyrrhetinsäure, Balansin A, Balansin B und deren Gemischen sowie deren Kalium-, Natrium-, Calcium- oder Ammoniumsalzen,
(c) Zusatzstoffe ausgewählt aus der Gruppe bestehend aus Hesperetin, Hydroxyphenylalkadione, 4-Hydroxychalkone, Propenylphenylglycoside, Divanilline, Hydroxyflavane, 1-(2,4-Dihydroxy-phenyl)-3-(3-hydroxy-4-methoxy-phenyl)-propan-1-on, Neoisoflavonoide sowie deren Gemische enthalten,
wobei das Verhältnis des Sucroseäquivalenz der Konzentration des Stoffes oder der Stoffe der Komponente (b) zur Sucroseäquivalenz der Konzentration des Stoffes oder der Stoffe der Komponente (a) in der entsprechenden Aromamischung größer oder gleich zwei ist.

2. Aromamischungen nach Anspruch 1, **dadurch gekennzeichnet, dass** sie als Komponente (a) mindestens ein Abrusosid der Formel (I) enthalten: 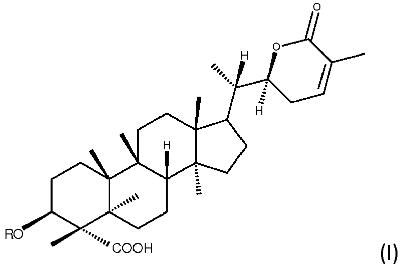 mit
| | |
|---|---|
| Abrusosid A | R= *β*-glc |
| Abrusosid B | R= *β*-glcA-6-CH₃²-β-glc |
| Abrusosid C | R= *β*-glc²-*β*-glc |
| Abrusosid D | R= *β*-glcA²-*β*-glc |
| Abrusosid E | R= *β*-glc²-*β*-glcA |

3. Aromamischungen nach den Ansprüchen 1 und/oder 2, **dadurch gekennzeichnet, dass** sie Extrakte von Pflanzen der Gattung *Abrus* enthalten.

4. Aromamischungen nach mindestens einem der Ansprüche 1 bis 3, **dadurch gekennzeichnet, dass** die pflanzlichen Extrakte sind aus der Gruppe, die gebildet wird von *Abrus aureus* R.Vig., *Abrus baladensis* Thulin, *Abrus bottae* Deflers, *Abrus canescens* Baker, *Abrus diversifoliatus* Breteler, *Abrus fruticulosus* Wight & Arn., *Abrus gawenensis* Thulin, *Abrus laevigatus* E.Mey., *Abrus longibracteatus, Abrus madagascariensis* R.Vig., *Abrus parvifolius* (R.Vig.) Verdc., *Abrus precatorius* L., *Abrus pulchellus* Thwaites, *Abrus sambiranensis* R.Vig., *Abrus schimperi* Baker, *Abrus somalensis* Taub., *Abrus wittei* Baker f. und deren Mischungen.

5. Zubereitungen zur oralen Aufnahme, die die Aromamischungen nach einem der Ansprüche 1 bis 4 umfassen.

6. Zubereitungen nach mindestens einem der Ansprüche 5 bis 5, **dadurch gekennzeichnet, dass** es sich dabei um Nahrungsmittel, Mund- und Zahnreinigungs- und -pflegemittel oder pharmazeutische Zubereitungen handelt.

7. Zubereitungen nach Anspruch 6, **dadurch gekennzeichnet, dass** es sich um Backwaren, Süßwaren, alkoholische oder nicht-alkoholische Getränke, Erfrischungsgetränke, Nektare, Schorlen, Obst- und Gemüsesäfte, Frucht- oder Gemüsesaftzubereitungen, Instantgetränke, Fleischprodukte, Eier oder Eiprodukte, Getreideprodukte, Milchprodukte, Produkte aus Sojaprotein oder anderen Sojabohnen-Fraktionen, Produkte aus anderen pflanzlichen Proteinquellen, Fruchtzubereitungen, Gemüsezubereitungen, Knabberartikel, Produkte auf Fett- und Ölbasis oder Emulsionen derselben, sonstige Fertiggerichte und Suppen, Gewürze, Würzmischungen sowie insbesondere Aufstreuwürzungen, Zahnpasten, Mundwässer, Erkältungsmittel oder Wirkstoffkapseln handelt.

8. Zubereitungen nach mindestens einem der Ansprüche 5 bis 7, **dadurch gekennzeichnet, dass** die Gesamtmenge der Komponenten (a) und (b) bezogen auf die konfektionierten Endprodukte 0,01 bis 1 Gew.-% beträgt.

9. Verfahren zur Herstellung einer Zubereitung zur oralen Aufnahme nach mindestens einem der Ansprüchen 5 bis 8 umfassend die Schritte
(a) Bereitstellen einer Aromamischung nach einem der Ansprüche 1 bis 4 oder der einzelnen Bestandteile einer solchen Aromamischung und
(b) Einarbeiten bereitgestellten Aromamischung oder deren Bestandteile in ein oral konsumierbares Produkt, so dass das Verhältnis des Sucroseäquivalenz der Konzentration des Stoffes oder der Stoffe der Komponente (b) zur Sucroseäquivalenz der Konzentration des Stoffes oder der Stoffe der Komponente (a) im konfektionierten Endprodukt größer oder gleich zwei ist.

10. Verfahren zur Aromatisierung und/oder zum Süßen von Zubereitungen zur oralen Aufnahme, umfassend die folgenden Schritte:
(a) Bereitstellen der Zubereitung und
(b) Vermischen der Zubereitung mit einer Aromamischung nach einem der Ansprüche 1 bis 4.

11. Verwendung der Aromamischungen nach mindestens einem der Ansprüche 1 bis 4 zur Aromatisierung oder zum Süßen von Zubereitungen zur oralen Aufnahme.

## Claims

1. Flavouring mixture, comprising
(a) at least one abrusoside or a plant extract with high amounts of abrusoside and
(b) at least one further natural sweetener selected from the group consisting of Sucrose, Trehalose, Lactose, Maltose, Melizitose, Melibiose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glyceraldehyd, Maltodextrin, Glycerin, Erythritol, Threitol, Arabitol, Ribitol, Xylitol, Sorbitol, Mannitol, Maltitol, Isomaltit, Dulcitol, Lactitol, Miraculin, Curculin, Monellin, Mabinlin, Thaumatin; Curculin, Brazzein, Pentadin, D-Phenylalanin, D-Tryptophan, Stevioside, Seviolbioside, Rebaudioside A, Rebaudisoide B, Rebaudioside C, Rebaudioside D, Rebaudioside E, Rebaudioside F, Rebaudioside G, Rebaudioside H, Dulcoside, Rubusoside, Oslandin, Polypodoside A, Strogin 1, Strogin 2, Strogin 4, Selligueanin A, Dihydroquercetin-3-acetate, Perillarin, Telosmosid A₁₅, Periandrin I-V, Phyllodulcin, Pterocaryosides, Cyclocaryosides, Mukuroziosides, trans-Anethol, trans-Cinnamaldehyde, Bryosides, Bryonosides, Bryonodulcosides, Carnosiflosides, Scandenosides, Gypensoides, Trilobatin, Phloridzin, Dihydroflavanoles, Hematoxylin, Cyanine, Chlorogenic acid, Albiziasaponine, Telosmosides, Gaudichaudioside, Morgrosides, Hernandulcin, Glycyrrhetic acid, Balansin A, Balansin B and their mixtures as well as their Potassium, Sodium, Calcium or Ammonium salts,
(c) additives selected from the group consisting of Hesperetin, Hydroxyphenylalkadiones, 4-Hydroxychalkones, Propenylphenylglycosides, Divanillines, Hydroxyflavanes, 1-(2,4-Dihydroxy-phenyl)-3-(3-hydroxy-4-methoxyphenyl)-propan-1-onem Neoisoflavonoids as well as their mixtures,
wherein the ratio of the sucrose equivalent of the concentration of the substance or the substances of component (b) and the sucrose equivalent of the concentration of the substance or the substances of component (a) in the respective flavouring mixture is higher than or equal two.

2. Flavouring mixtures according to claim 1, **characterized in that** they comprise as component (a) at least one abrusoside of formula (I): 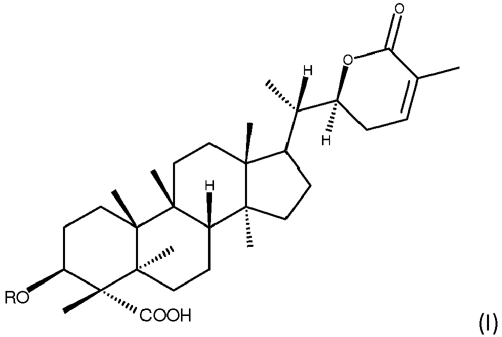 with
| | |
|---|---|
| Abrusosid A | R= *β*-glc |
| Abrusosid B | R= *β*-glcA-6-CH₃²-β-glc |
| Abrusosid C | R= *β*-glc²-*β*-glc |
| Abrusosid D | R= *β*-glcA²-*β*-glc |
| Abrusosid E | R= *β*-glc²-*β*-glcA |

3. Flavouring mixtures according to claims 1 and/or 2, **characterized in that** they comprise extracts of plants of the genus *Abrus.*

4. Flavouring mixtures according to at least one of the claims 1 to 3, **characterized in that** the herbal extracts are selected from the group consisting of *Abrus aureus* R.Vig., *Abrus baladensis* Thulin, *Abrus bottae* Deflers, *Abrus gawenensis* Thulin, *Abrus laevigatus* E.Mey., *Abrus longibracteatus, Abrus madagascariensis* R.Vig., *Abrus parvifolius* (R.Vig.) Verdc., *Abrus precatorius* L., *Abrus pulchellus* Thwaites, *Abrus sambiranensis* R.Vig., *Abrus schimperi* Baker, *Abrus somalensis* Taub., *Abrus wittei* Baker f. and their mixtures.

5. Compositions for oral intake comprising the flavouring mixtures according to one of the claims 1 to 4.

6. Compositions according to claim 5 to 5, **characterized in that** the compositions are food products, mouth and teeth cleaning and care agents or pharmaceutical compositions.

7. Compositions according to claim 6, **characterized in that** they are pastries, confectioneries, alcoholic or non-alcoholic drinks, soft drinks, nectars, spritzers, fruit and vegetable juices, fruit or vegetable juice preparations, instant drinks, meat products, eggs or egg products, grain products, milk products, products made from soy protein or other soybean fractions, products made from other herbal protein sources, fruit preparations, vegetable preparations, snacks, products based on fat and oil or emulsions thereof, further instant meals and soups, spices, seasoning mixes as well as especially seasonings, toothpastes, mouthwashes, cold remedies or capsules containing active ingredients.

8. Compositions according to at least one of the claims 5 to 7, **characterized in that** the total amount of components (a) and (b) related to the prepared final product is 0.01 to 1 wt.-%.

9. Method for preparing a composition for oral intake according to at least one of the claims 5 to 8 comprising the steps
(a) providing a flavouring mixture according to one of the claims 1 to 4 or single components of such a flavouring mixture and
(b) mixing the provided flavouring mixture or its components into a product for oral consumption, so that the ration of the sucrose equivalent of the concentration of the substance or the substances of component (b) and the sucrose equivalent of the concentration of the substance or the substances of component (a) in the prepared final product is higher than or equal two.

10. Method for aromatization and/or sweetening compositions for oral intake, comprising the following steps:
(a) providing the composition and
(b) mixing the composition with a flavouring mixture according to one of the claims 1 to 4.

11. Use of the flavouring mixtures according to at least one of the claims 1 to 4 for aromatization or sweetening of compositions for oral intake.

## Revendications

1. Mélanges d'arômes, contenant
(a) au moins un abrusoside ou un extrait végétal riche en abrusoside et
(b) au moins un édulcorant naturel supplémentaire sélectionné dans le groupe constitué par la saccharose, la tréhalose, la lactose, la maltose, le mélézitose, le mélibiose, le raffinose, le palatinose, le lactulose, le D-fructose, le D-glucose, le D-galactose, le L-rhamnose, le D-sorbose, le D-mannose, le D-tagatose, le D-arabinose, le L-arabinose, le D-ribose, le D-glycéraldéhyde, la maltodextrine, la glycérine, l'érythritol, le threitol, l'arabitol, le ribitol, le xylitol, le sorbitol, le mannitol, le maltitol, l'isomaltitol, le dulcitol, le lactitol, la miraculine, la curculine, la monelline, la mabinline, la thaumatine, la curculine, la brazzéine, la pentadine, la D-phénylalanine, le D-tryptophane, le stévioside, le stéviolbioside, le rébaudioside A, le rébaudioside B, le rébaudioside C, le rébaudioside D, le rébaudioside E, le rébaudioside F, le rébaudioside G, le rébaudioside H, le dulcoside, le rubusoside, l'oslandine, le polypodoside A, la strogine 1, la strogine 2, la strogine 4, la selliguéanine A, le 3-acétate de dihydroquercétine, la périllartine, le télosmoside A₁₅, la périandrine I-V, la phyllodulcine, les ptérocaryosides, les cyclocaryosides, les mukuroziosides, le trans-anéthol, le trans-cinnamaldéhyde, les bryosides, les bryonosides, les bryonodulcosides, les carnosiflosides, les scandénosides, les gypénosides, la trilobatine, la phloridzine, les dihydroflavanols, l'hématoxyline, la cyanine, l'acide chlorogénique, l'albiziasaponine, les télosmosides, le gaudichaudioside, les mogrosides, l'hernandulcine, l'acide glycyrrhétinique, la balansine A, la balansine B et leurs mélanges ainsi que leurs sels de potassium, de sodium, de calcium ou d'ammonium,
(c) des additifs sélectionnés dans le groupe constitué par l'hespérétine, l'hydroxyphénylalcanedione, le 4-hydroxychalcone, les glycosides de propénylphényle, la divanilline, l'hydroxyflavane, le 1-(2,4-dihydroxy-phényl)-3-(3-hydroxy-4-méthoxy-phenyl)-propan-1-on, les néoisoflavonoides ainsi que leurs mélanges,
sachant que le rapport de l'équivalence en saccharose de la concentration de la substance ou des substances du composant (b) à l'équivalence en saccharose de la concentration de la substance ou des substances du composant (a) est supérieure ou égale à deux dans le mélange d'arômes afférent.

2. Mélanges d'arômes selon la revendication 1, **caractérisés en ce qu'**ils contiennent en tant que composant (a) au moins un abrusoside de formule (I) : 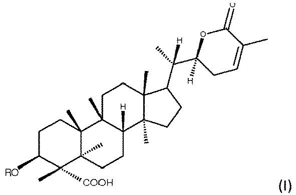 sachant que
| | |
|---|---|
| abrusoside A | R= *β*-glc |
| abrusoside B | R= *β*-glcA-6-CH₃²-β-glc |
| abrusoside C | R= *β*-glc²-*β*-glc |
| abrusoside D | R= *β*-glcA²-*β*-glc |
| abrusoside E | R= *β*-glc²-*β*-glcA |

3. Mélanges d'arômes selon les revendications 1 et/ou 2, **caractérisés en ce qu'**ils contiennent des extraits de plantes du genre *Abrus.*

4. Mélanges d'arômes selon l'une au moins des revendications 1 à 3, **caractérisés en ce que** les extraits végétaux sont sélectionnés dans le groupe constitué par l'*Abrus aureus* R.Vig., l'*Abrus baladensis* Thulin, l'*Abrus bottae* Deflers, l'*Abrus canescens* Baker, l'*Abrus diversifoliatus* Breteler, l'*Abrus fruticulosus* Wight & Am., l'*Abrus gawenensis* Thulin, l'*Abrus laevigatus* E.Mey., l'*Abrus longibracteatus,* l'*Abrus madagascariensis* R.Vig., *Abrus parvifolius* (R.Vig.) Verdc., l'*Abrus precatorius* L, l'*Abrus pulchellusTUwaites,* l'*Abrus sambiranensis* R.Vig., l'*Abrus schimperi* Baker, l'*Abrus somalensis* Taub., l'*Abrus wittei* Baker f. et leurs mélanges.

5. Préparations pour l'ingestion orale, qui contiennent les mélanges d'arômes selon l'une des revendications 1 à 4.

6. Préparations selon l'une au moins des revendications 5 à 5, **caractérisées en ce qu'**elles sont des denrées alimentaires, des produits de nettoyage et d'hygiène de la bouche et des dents ou des préparations pharmaceutiques.

7. Préparations selon la revendication 6, **caractérisées en ce qu'**elles sont des produits de boulangerie et de pâtisserie, des produits de confiserie, des boisons alcooliques ou non-alcooliques, des boissons rafraîchissantes, des nectars, des mélanges de boissons, des jus de fruits et de légumes, des préparations à base de jus de fruits ou de légumes, des boissons instantanées, des viandes, des oeufs ou des produits à base d'oeufs, des produits céréaliers, des produits laitiers, des produits de protéine du soja ou d'autres fractions de fèves de soja, des produits issus d'autres sources de protéines végétales, des préparations de fruits, des préparations de légumes, des articles à grignoter, des produits à basse de matières grasses et d'huile ou des émulsions des mêmes, d'autres plats préparés ou soupes prêts à manger, des épices, des mélanges d'épices ainsi que, en particulier, des assaisonnements à saupoudrer, des pâtes dentifrices, des solutions pour bain de bouche, des produits contre les refroidissements ou des capsules de substances actives.

8. Préparations selon l'une au moins des revendications 5 à 7, **caractérisées en ce que** la quantité totale des composants (a) et (b) s'élève à 0,01 à 1 % du poids par rapport aux produits finis confectionnés.

9. Procédé pour fabriquer une préparation pour l'ingestion orale selon l'une au moins des revendications 5 à 8, comprenant les étapes suivantes :
(a) fournir un mélange d'arômes selon l'une des revendications 1 à 4 ou les composants individuels d'un tel mélange d'arômes, et
(b) incorporer le mélange d'arômes fourni ou ses composants dans un produit consommable oralement de sorte que le rapport de l'équivalence en saccharose de la concentration de la substance ou des substances du composant (b) à l'équivalence en saccharose de la concentration de la substance ou des substances du composant (a) soit supérieure ou égale à deux dans le produit fini confectionné.

10. Procédé pour aromatiser et/ou pour sucrer des préparations pour l'ingestion orale, comprenant les étapes suivantes :
(a) fournir la préparation et
(b) mélanger la préparation avec un mélange d'arômes selon l'une des revendications 1 à 4.

11. Utilisation des mélanges d'arômes selon l'une au moins des revendications 1 à 4 pour aromatiser ou pour sucrer des préparations pour ingestion orale.
